(19) Europäisches Patentamt
European Patent Office
Office européen des brevets

(11) **EP 2 106 037 B1**

(12) **EUROPEAN PATENT SPECIFICATION**

(45) Date of publication and mention
of the grant of the patent:
**02.11.2016 Bulletin 2016/44**

(51) Int Cl.:
*H04B 7/04* *(2006.01)*        *H04B 7/06* *(2006.01)*
*H04W 16/28* *(2009.01)*       *H04W 28/18* *(2009.01)*
*H04B 7/08* *(2006.01)*        *H04W 8/22* *(2009.01)*
*H04W 8/24* *(2009.01)*        *H04W 48/10* *(2009.01)*
*H04W 88/08* *(2009.01)*

(21) Application number: **09161018.8**

(22) Date of filing: **07.09.2005**

(54) **Implementing a smart antenna in a wireless local area network**

Umsetzung einer intelligenten Antenne in einem drahtlosen LAN

Mise en oeuvre d'une antenne intelligente dans un réseau local sans fil

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.09.2004 US 608776 P**
**10.09.2004 US 609132 P**
**10.09.2004 US 608758 P**
**21.12.2004 US 18794**
**29.12.2004 US 25018**
**25.02.2005 US 66915**

(43) Date of publication of application:
**30.09.2009 Bulletin 2009/40**

(60) Divisional application:
**16184244.8**

(62) Document number(s) of the earlier application(s) in accordance with Art. 76 EPC:
**05794185.8 / 1 787 401**

(73) Proprietor: **InterDigital Technology Corporation**
**Wilmington, DE 19809 (US)**

(72) Inventors:
• **Marinier, Paul**
**Brossard Québec J4X 2J7 (CA)**
• **Chandra, Arty**
**Manhasset Hills, NY 11040 (US)**
• **Cha, Inhyok**
**Yardley, PA 19067 (US)**
• **Roy, Vincent**
**Longueuil, Québec J4N 1N3 (CA)**

(74) Representative: **Awapatent AB**
**P.O. Box 1066**
**251 10 Helsingborg (SE)**

(56) References cited:
**EP-A1- 1 187 506        US-A1- 2002 094 843**
**US-A1- 2002 193 146**

**Description**

FIELD OF INVENTION

The present invention generally relates to wireless local area networks (WLANs), and more particularly, to methods and apparatus for implementing a smart antenna in a WLAN, for supporting use of a smart antenna in a WLAN, and for transferring smart antenna capability information between stations (STAs) in a WLAN.

BACKGROUND

In a WLAN operating in infrastructure mode, a STA typically performs scanning in order to estimate which access point (AP) is the best candidate to serve it. Scanning performed by the STA can be passive or active. In passive scanning, the STA listens for beacon frames sent by the APs. In active scanning, the STA sends out probe requests and the APs respond by sending a probe response to the STA.

In order to enhance coverage and increase throughput, APs can be equipped with advanced antenna structures, which allow them to change the radiation pattern (the beam) they use. The term "smart antenna" as used herein means a set of N antennas that have different radiation patterns, typically pointing in selected directions (or not pointing toward any particular direction in the case of an omni-directional antenna). The transmitter and/or receiver of a node (AP or STA) selects the most appropriate antenna (or "beam") for communicating with its counterpart(s). The most appropriate beam is typically the one that results in the highest signal-to-interference-plus-noise ratio (SINR) at the receiving node in the case of dedicated connections, where a node is transmitting a packet to another specific node.

Enhancing coverage is a function of the position of the STA to which the AP sends packets and/or of the time-varying channel. Because beacon frames sent by an AP are not aimed at a particular STA, but rather at a multitude of STAs, they tend to be sent uniformly across all directions (i.e., with an omni-directional beam). Similarly, because it is desirable for an AP to hear the packets from all its associated STAs, the AP typically listens to the channel using an omni-directional beam. This type of beam does not necessarily allow the AP to determine which beam is the best to serve a STA, even after it has received a probe request from the STA. Therefore, a probe response also tends to be transmitted using an omni-directional beam.

A STA uses the beacons (passive scanning) and the probe requests (active scanning) to estimate, among other things, the quality of the radio links (e.g., signal to noise ratio (SNR)) that it could obtain from the different APs. Beacons and probe responses are typically sent by the APs using an omni-directional beam for the reasons described above. This creates a situation where a STA may estimate, based on the received signal quality it perceives from the beacons and/or probe responses, that a given AP is the best candidate, when in fact this AP will perform worse than another AP for the transmission of traffic frames which can be sent with directional beams.

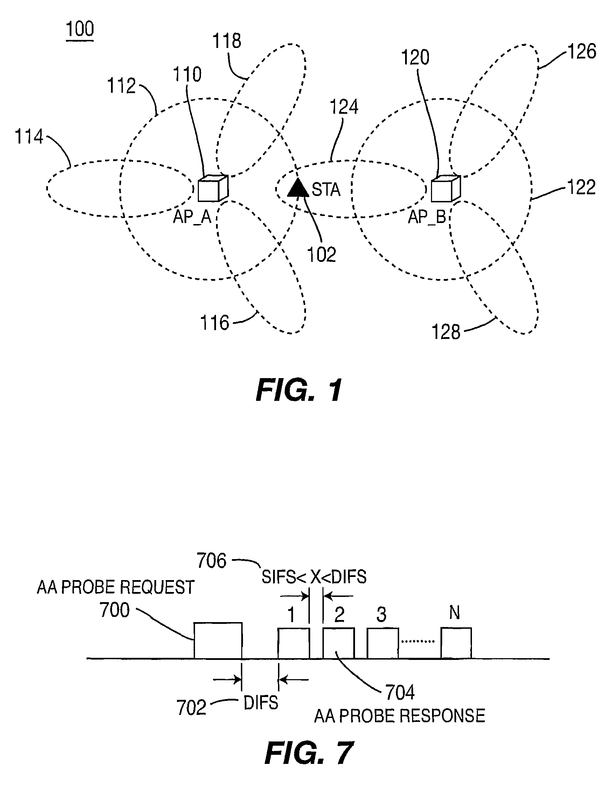

Figure 1 shows an exemplary WLAN 100 including a STA 102 and two APs, AP_A 110 and AP_B 120. AP_A 110 can utilize an omni-directional beam 112 and a plurality of directional beams 114, 116, 118. AP_B 120 can utilize an omni-directional beam 122 and a plurality of directional beams 124, 126, 128.

The STA 102 measures the received power of the various beams as shown in Table 1.

Table 1 - Measured Received Signal Power at STA 102

| Signal from | On beam number | Beam type | Received power at STA 102 |
|---|---|---|---|
| AP_A | 112 | omni | -75 dBm |
| AP_A | 116 | directional | -85 dBm |
| AP_A | 118 | directional | -85 dBm |
| AP_B | 122 | omni | -80 dBm |
| AP_B | 124 | directional | -70 dBm |

The STA 102 can receive stronger beacons and/or probe responses via omni-directional beam 112 from AP_A 110 than via omni-directional beam 122 from AP_B 120. However, AP_B 120 would be a better candidate than AP_A 110 for transmitting traffic frames, since AP_B 120 is in a better position to make use of its advanced antenna structure and focus the energy towards the STA 102 (via directional beam 124).

In an AP-based WLAN, multiple STAs may be associated to a given AP at a given time. If the multiple-access scheme is carrier sense multiple access/collision avoidance (CSMA/CA), such as in 802.11-based WLANs, any STA is susceptible to transmit a packet (also called a "frame") to its associated AP at any given time. The AP determines which of its associated STAs has transmitted a packet after the packet has been completely received and decoded, based on the source address contained in the medium access control (MAC) header of the packet. The AP needs to have received the whole packet prior to making the source determination, because the error detection bits covering both the MAC header and the MAC payload are received at the end of the packet.

In a mesh architecture, STAs (or "mesh nodes") may also be equipped with smart antennas in order to improve the SNR of received signals or for other purposes such as interference reduction.

The multiple-access scheme in 802.11-based WLANs makes selecting the most appropriate beam for receiving packets at the AP difficult when more than one STA is associated to the AP. This is because STAs may be located anywhere around the AP, and therefore the most appropriate beam is generally not the same for each STA. Since the identity of the STA is not known before the packet is completely received, the AP cannot use this information to decide which antenna to select for packet reception. The same problem occurs in a mesh architecture, where a mesh node can be linked to more than one other mesh node.

To circumvent this difficulty, several alternatives are possible, but they all have drawbacks.

1) The AP could restrict itself to using an omni-directional pattern for all packet receptions, thus losing the potential gain from using a smart antenna.

2) The AP could use the signals from multiple beams simultaneously and combine them or select the best beam among them. This solution increases the complexity of the receiver, because the signals from multiple beams must be demodulated.

3) The AP could, just after the start of packet reception, switch among all its available beams in a successive manner, pick the beam that results in the best signal quality, and switch to this beam for the remaining duration of the packet reception. This approach has the drawback that the AP risks incorrectly receiving some bits while it attempts less suitable beams for a particular packet, resulting in the loss of the packet.

4) The AP could try decoding the MAC address of the sender (contained in the MAC header of the packet) using an omni-directional antenna and then use the beam most appropriate for the STA identified in the MAC header for the remainder of the packet. The problem with this approach is that the MAC header is transmitted at the same rate as the remainder of the packet. If the omni-directional antenna does not offer sufficient gain for adequate signal quality for the MAC payload, it is unlikely that the MAC header would be decoded correctly. In the opposite case (if the omni-directional antenna did offer sufficient gain), there would be no need to use a smart antenna in the first place.

5) The STAs could be constrained to send every packet using the Request-to-Send/Clear-to-Send (RTS/CTS) procedure. This would allow the AP to identify the sending STA before the arrival of the data packet. However, this is at the cost of a significant throughput penalty due to the overhead of the RTS and CTS packets, which partially defeats the purpose of using smart antennas.

6) The AP could poll STAs using different beams in turn. This approach has two problems. First, it is difficult to attempt to predict the time to spend on each beam in a system with bursty traffic, such as a WLAN. Second, it is difficult to prevent STAs from responding to a poll sent using a beam sub-optimal (but hearable) for them, given the necessary overlap between antenna patterns and the irregularities of the radio environment, such as shadowing.

In a WLAN, smart antenna capabilities may exist at the AP, at the STA, or both. Without a prior exchange of antenna capability information, the AP does not know how to coordinate its smart antenna features with that of a STA and vice versa.

The potentially adverse affect on a WLAN by not exchanging smart antenna capability information can be illustrated in the following example. Suppose that switched-beam smart antennas are employed at both an AP and a STA and yet each end's smart antenna capabilities (for example, the number of beam modes that are available and need to be scanned, as well as time duration needed to test each of the available beams) are not known to the other end. Since neither the AP nor the STA know about the smart antenna capabilities of its receiving end, each will have to either: (1) make guesses as to the smart antenna capabilities of the other end; or (2) try to test its own transmit antenna beams without knowing that the receiving end might, at the same time, employ a beam search of its own.

If the smart antenna capabilities at both ends were known to each other, both devices could follow simple, pre-agreed rules to avoid service degradations due to beam searching at the same time on both ends. For example, if the "beam search time" ($T_{search}$) is known for both the AP and the STA, then a simple rule that could be useful might be that the device (the AP or the STA) that first receives a packet after association should wait for the duration of $T_{search}$ before it starts its own beam search, in an attempt to give the other end (which had initiated transmission) enough time to conduct its own beam search.

Current antenna technologies enhance reception by using receive and/or transmit diversity. These techniques either take longer to obtain any gain or provide less gain than otherwise would have been possible. Additionally, current antenna technologies often need to use proprietary messages to know the antenna capability of a STA. In the absence of this information, the APs and STAs cannot take advantage of antenna capabilities to increase the data rate or range.

For smart antenna features to work effectively, the information on the capabilities of the STA and the AP should be exchanged. Exchanging antenna information also allows possible coordination during optimization of smart antenna features such as beam selection, beam scanning, beam forming, multiple input multiple output (MIMO), and any other capability that allows changing the beam pattern and/or gain of the antennas.

EP 1 187 506 A1 discloses a communication system's transmit configuration being reconfigured based on mobile station associated conditions such as the capability of the mobile receiver, carrier to interference or signal to noise ratios, and the degree of mobility associated with the mobile station. US 2002/193 146 A1 discloses a method and an apparatus for negotiating a transmission scenario in a mixed mode spectrum wireless communication system capable of both MISO (Multiple-Input Single-Output) and SISO (Single-Input Single-Output) traffic.

SUMMARY

The present invention relates to a 802.11 station and a method for exchanging antenna capability information as defined by the appended claims. Any reference to embodiments herein which do not fall within the scope of the appended claims should be construed as serving merely for facilitating the understanding of this disclosure.

A method for implementing a smart antenna in establishing association between a STA and an AP in a WLAN begins by transmitting a beacon frame by the AP on one antenna beam. The beacon frame is received at the STA, which measures the signal quality of the beacon frame. The AP switches to a different antenna beam and repeats the method until the beacon frame has been transmitted on all antenna beams. The STA associates to the AP that transmits the beacon frame with the highest signal quality on one of its antenna beams. A similar method may be used in which the STA sends a probe request frame to the AP, which then responds with probe response frames sent on multiple antenna beams.

A system for implementing a smart antenna in establishing association between a STA and an AP in a WLAN includes a beacon frame sent from the AP to the STA. The beacon frame includes a field to identify a total number of antenna beams on which a transmission will be made and a field to identify the beam that is currently being transmitted on.

*Another system for implementing a smart antenna in establishing* association between a STA and an AP in a WLAN includes a probe request frame sent from the STA to the AP and a probe response frame sent from the AP to the STA. The probe request frame includes an indication whether the STA wants to scan multiple antenna beams from the AP. The probe response frame includes a field to identify a total number of antenna beams on which a transmission will be made and a field to identify the beam that is currently being transmitted on.

A method for supporting use of a smart antenna in a WLAN including an AP and a STA begins by selecting an antenna beam by the AP to use for communication with the STA. The selected beam information is sent from the AP to the STA. A packet is transmitted from the STA to the AP, the packet including the selected beam information, whereby the AP uses the selected beam to receive at least a part of the packet.

A system for supporting use of a smart antenna in a WLAN having an AP and a STA includes a first packet and a second packet. The first packet is sent from the AP to the STA and includes a selected beam indicator, a MAC address of the AP, and a MAC address of the STA. The selected beam indicator identifies an antenna beam selected by the AP to use for communication with the STA. The second packet is sent from the STA to the AP and includes the selected beam indicator, whereby the AP receives at least a part of the second packet via the selected beam.

A system for exchanging smart antenna capability information between a transmitting STA and a receiving STA in a wireless communication system includes an antenna capability information element (IE). The antenna capability IE is sent from the transmitting STA to the receiving STA prior to data transmission between the transmitting STA and the receiving STA. When used in a WLAN, the antenna capability IE can be sent as part of a management frame.

A method for exchanging smart antenna capability information between a transmitting STA and a receiving STA in a wireless communication system includes the steps of: sending antenna capability information from the transmitting STA to the receiving STA, determining whether the receiving STA can support the antenna capabilities of the transmitting STA, adjusting settings at the receiving STA if the receiving STA can support the antenna capabilities of the transmitting STA, and transmitting data from the transmitting STA to the receiving STA using the antenna capabilities if the receiving STA can support the antenna capabilities of the transmitting STA.

A system for implementing smart antenna features in a WLAN includes an AP and a STA. The AP includes a first antenna capability determining device; a first antenna capability information device connected to the first antenna capability determining device, the first antenna capability determining device configured to determine the antenna capabilities of the AP by examining information stored in the first antenna capability information device; a first transmitter/receiver connected to the first antenna capability determining device; a first antenna connected to the transmitter/receiver; and a beam switching device connected to the transmitter/receiver, the beam switching device configured to switch beams of the first antenna. The STA includes a second antenna; a second transmitter/receiver connected to the second antenna, the second transmitter/receiver configured to receive antenna capability information from the AP; a second antenna capability determining device connected to the second transmitter/receiver; a second antenna capability information device connected to the second antenna capability determining device, the second antenna capability determining device configured to compare the antenna capabilities of the AP received from the second transmitter/receiver with the antenna capabilities of the station retrieved from the second antenna capability information device; and a station setting adjustment device connected to the second antenna capability determining device, the station setting adjustment device configured to adjust the settings of the station to utilize smart antenna capabilities.

BRIEF DESCRIPTION OF THE DRAWINGS

A more detailed understanding of the invention may be had from the following description of a preferred embodiment, given by way of example, and to be understood in conjunction with the accompanying drawings, wherein:

Figure 1 is a diagram of a WLAN showing omni-directional and directional antenna beam patterns;
Figure 2 is a diagram of a beacon frame format for identifying antenna beams;
Figure 3 is a timing diagram for passive scanning;
Figure 4 is a flowchart of a method for transmitting a beacon frame in passive scanning;
Figure 5 is a diagram of a probe request frame format for use in active scanning;
Figure 6 is a diagram of a probe response frame format for use in active scanning;
Figure 7 is a timing diagram for active scanning;
Figure 8 is a flowchart of a method for transmitting a probe response frame in active scanning;
Figure 9 is a diagram showing transmission of data packets between an AP and STAs;
Figure 10 is a diagram of a frame format including beam indicator information sent by a STA;
Figure 11 is a diagram of a beam indicator message format sent by an AP;
Figures 12a and 12b are diagrams of frame formats including beam indicator information sent by an AP;
Figures 13a and 13b are diagrams of alternate frame formats including beam indicator information sent by an AP;
Figure 14 is a flowchart of a method for transmitting smart antenna information by an AP and a STA;
Figure 15 is a flow diagram of an example the method shown in Figure 14;
Figure 16 is a diagram of an existing capability information field;
Figure 17 is a diagram of a portion of a frame including an antenna capability IE;
Figure 18 is a diagram of the antenna capability IE shown in Figure 17;
Figure 19 is a flowchart of a method for exchanging antenna capability information;
Figure 20 is a flow diagram of an alternate method for exchanging antenna capability information; and
Figure 21 is a block diagram of a system configured to implement the present invention.

DETAILED DESCRIPTION OF THE PREFERRED EMBODIMENTS

Hereafter, the term "station" (STA) includes, but is not limited to, a wireless transmit/receive unit, a user equipment, a fixed or mobile subscriber unit, a pager, or any other type of device capable of operating in a wireless environment. When referred to hereafter, the term "access point" (AP) includes, but is not limited to, a base station, a Node B, a site controller, or any other type of interfacing device in a wireless environment.

An example solves the beam selection problem for both passive scanning and active scanning. Another example also relates to a method and a signaling scheme that can be implemented in an AP and a STA to enable the use of smart antennas at the AP for the reception of packets from STAs. The method can also be implemented in mesh nodes in the case of a mesh architecture. The present invention addresses antenna capability information exchange between an AP and STA and builds upon the current messages provided by the 802.11 standards and is fully backward compatible.

Passive Scanning

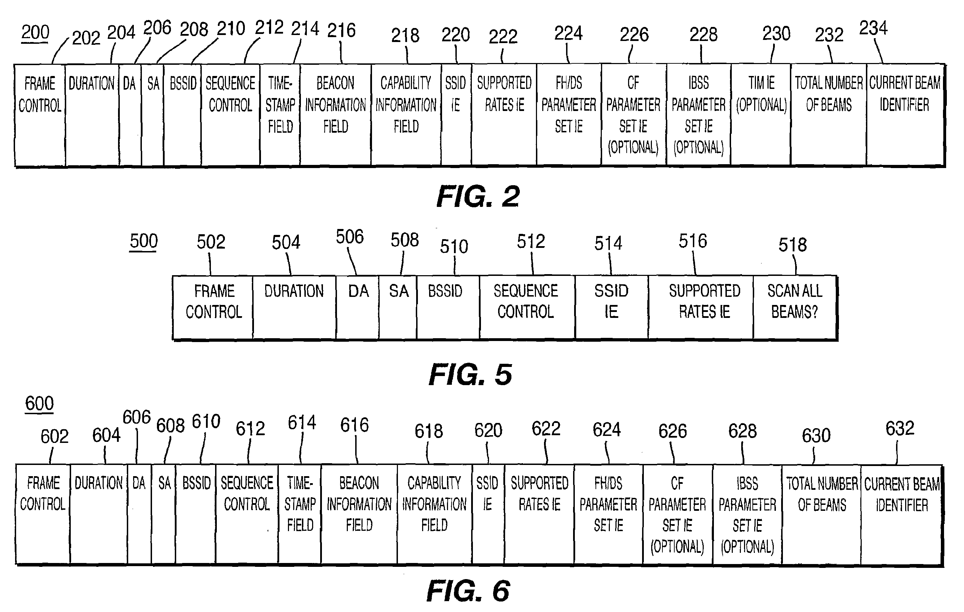

An example provides the signaling and support for an AP to send its beacon on multiple beams. This can be achieved by adding two fields to the WLAN beacon management frame, as shown in Figure 2. The resulting management frame is referred to as an Advanced Antenna (AA) beacon frame 200. Many of the fields of the frame 200 are in the existing beacon frame as defined by the 802.11 standards. These fields include frame control 202, duration 204, destination address (DA) 206, source address (SA) 208, basic service set (BSS) identification (BSSID) 210, sequence control 212, timestamp 214, beacon interval 216, capability information 218, SSID information element (IE) 220, supported rates IE 222, frequency hop (FH)/distribution system (DS) parameter set IE 224, contention free (CF) parameter set IE 226, independent BSS (IBSS) parameter set IE 228, and traffic indication map (TIM) IE 230.

The first new field 232 of the frame 200 indicates to the STA that the beacon frames are sent N times within an AA beacon interval, where N corresponds to the number of beams on which the AP will send the beacon. The second new field 234 identifies the beam that was used to transmit the beacon; i.e., the beam identifier. When receiving any of the multiple AA beacon frames sent by an AP, the STA is able to identify the number of beams (232) included in the beam sweep performed by the AP and it is also able to distinguish the different versions it receives by looking at the beam identifier (234).

It is noted that the AA beacon interval 216 can be set to the same value or different value than the non-AA beacon interval. For the system to be able to offer service to users, the AA beacon interval has to be larger than the beam scan duration, so that there is time left to transmit traffic frames. This could be enforced, for example, as a configuration management rule that would prevent a user from configuring the AP such that the beam scan would take a large portion of the AA beacon interval time.

In an example, the N AA beacon frames 200 are sent successively in time. This is achieved by having the AP use a delay (X) shorter than the DIFS (Distributed Inter-Frame Space) but larger than the SIFS (Short Inter-Frame Space) when trying to access the wireless medium between the transmission of two beacon frames. Any value of X between SIFS and DIFS can be used. It should be noted that the AP would still need to wait for one entire DIFS when accessing the wireless medium to transmit the first of the N beacon frames. This places an upper bound on the maximum amount of time a STA would need to scan the medium once it detected one of the N beacons advertised by an AP; whereby:

$$\text{Upper bound} = (N - 1) \times (\text{beacon\_duration} + X) \qquad \text{Equation 1}$$

In other words, this prevents a STA from scanning a channel for an undetermined amount of time without ever knowing if all N beacons have been transmitted by the AP.

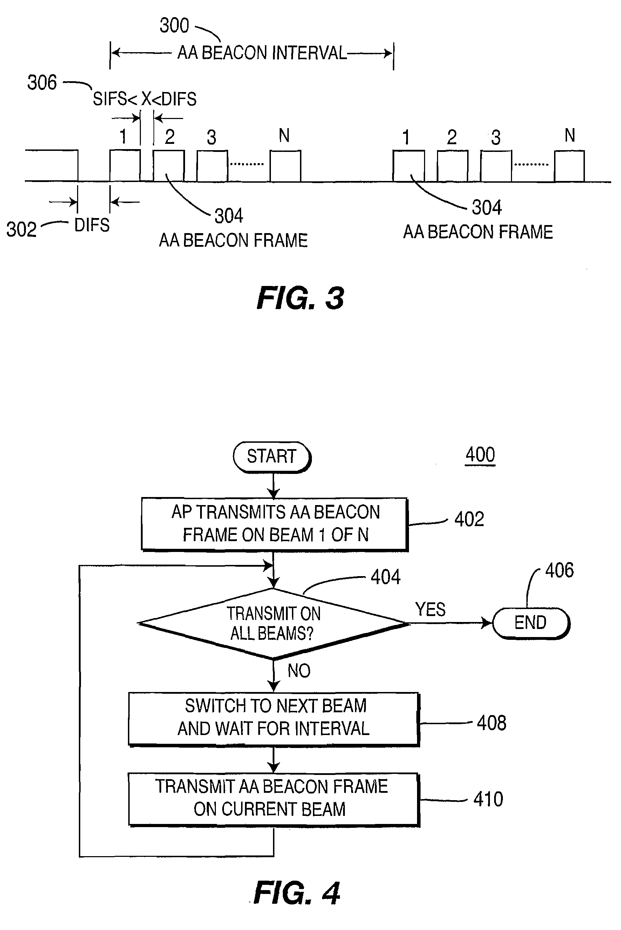

The timing diagram for the passive scanning is shown in Figure 3. Before the AP begins the AA beacon interval 300, it waits for one DIFS 302. At the start of the AA beacon interval 300, the AP transmits the first beacon frame 304. In between beacon frames 304, the AP waits for the interval X (306), where X is shorter than the DIFS and larger than the SIFS.

A method 400 for transmitting an AA beacon frame in passive scanning is shown in Figure 4. The method 400 begins with the AP transmitting an AA beacon frame 200 on one of N antenna beams, with the current beam identifier 234 set to the current beam (step 402). A determination is made if the AA beacon frame has been transmitted on all N beams (step 404). If the AA beacon frame has been transmitted on all N beams, then the method terminates (step 406). If the AA beacon frame has not been transmitted on all N beams (step 404), then the method waits for the interval X (step 408). The antenna system then switches to the next beam (step 408) and transmits the AA beacon frame 200 on the current beam, with the current beam identifier 234 set to the current beam (step 410) and the method continues with step 404. It is noted that the step of switching to the next beam (step 408) can be performed either before or after waiting for the interval X.

The determination used by the STA whether to associate to the AP is implementation specific. One method is to use the power level or SNR perceived on the beacons to select the AP to associate to. An example allows a STA to use this method while fully capitalizing on the fact that the AP is equipped with an advanced antenna *system.*

Active Scanning

An example also addresses active scanning by allowing a STA to request the AP to send probe responses on multiple beams. This can be achieved by adding a new field to the WLAN probe request frame. The resulting frame is shown in Figure 5 and is referred to as an AA probe request frame 500. Many of the fields of the frame 500 are in the existing probe request frame as defined by the 802.11 standards. These fields include frame control 502, duration 504, DA 506, SA 508, BSSID 510, sequence control 512, SSID IE 514, and supported rates IE 516. The new field 518 of the frame 500 provides an indication to the AP (as a yes or no value) that the STA wants to scan all beams of the AP.

In addition, two new fields are added to the WLAN probe response frame. The resulting frame is shown in Figure 6 and is referred to as an AA probe response frame 600. Many of the fields of the frame 600 are in the existing probe response frame as defined by the 802.11 standards. Fields 602-628 of the frame 600 are the same as fields 202-228 of the frame 200.

The first new field 630 of the frame 600 indicates to the STA that the AA probe responses are sent N times within an AA beacon interval, where N corresponds to the number of beams on which the AP will send the probe response. The second new field 632 identifies the beam that was used to transmit the AA probe response; this is the beam identifier. An AP equipped with an AA system responds to the AA probe request by sending multiple (N) AA probe responses to the STA.

In an example, the N AA probe responses are sent successively in time. This is achieved by having the AP use a delay (X) shorter than the DIFS but larger than the SIFS when trying to access the wireless medium between the transmission of two AA probe responses. It should be noted that the AP would still need to wait for one entire DIFS when accessing the wireless medium to transmit the first of the N probe responses. This places an upper bound on the maximum amount of time a STA would need to wait once it received one of the N AA probe responses sent by an AP; whereby:

$$\text{Upper bound} = (N - 1) \times (\text{probe response duration} + X) \qquad \text{Equation 2}$$

The timing diagram for the active scanning is shown in Figure 7. After the STA sends the AA probe request frame 700, the AP waits for one DIFS 702 before sending the first AA probe response frame 704. In between probe response frames 704, the AP waits for the interval X (706), where X is shorter than the DIFS and larger than the SIFS.

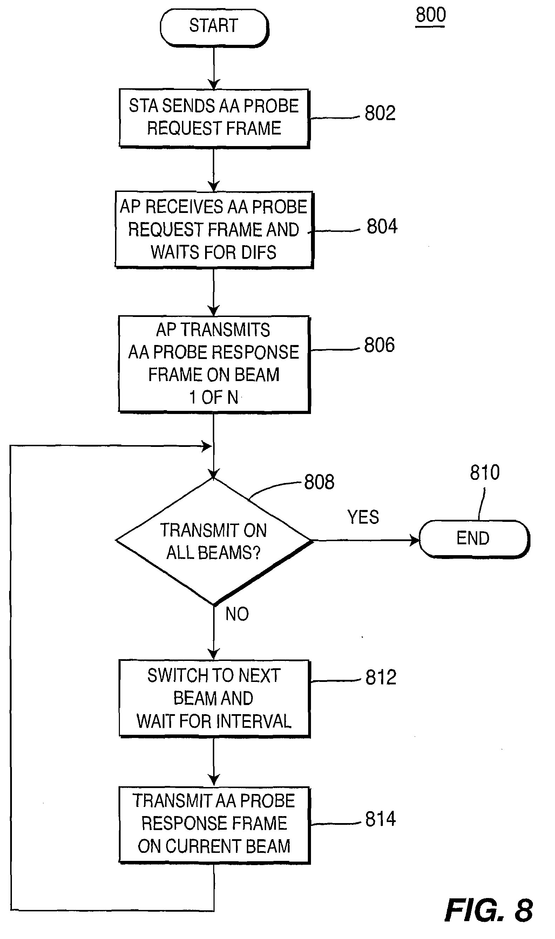

A method 800 for transmitting an AA probe response frame in active scanning is shown in Figure 8. The method 800 begins with the STA sending an AA probe request frame 500, including setting the indicator 518 to scan all beams of the AP (step 802). The AP receives the AA probe request frame and waits for the DIFS period (step 804). The AP transmits an AA probe response frame 600 on one of N antenna beams, with the current beam identifier 632 set to the current beam (step 806). A determination is made if the AA probe response frame has been transmitted on all N beams (step 808). If the AA probe response frame has been transmitted on all N beams, then the method terminates (step 810). If the AA probe response frame has not been transmitted on all N beams (step 808), then the method waits for the interval X (step 812). The antenna system then switches to the next beam (step 812) and transmits the AA probe response frame 600 on the current beam, with the current beam identifier 632 set to the current beam (step 814) and the method continues with step 808. It is noted that the step of switching to the next beam (step 812) can be performed either before or after waiting for the interval X.

In prior art systems, the decision made by a STA as to which AP to associate to could not take into account the radio link gain obtained from the advanced antenna structure at the AP. This meant that the data collected from scanning the RF environment, either passively or actively, where the beacon frames and probe responses are sent by APs in an omni-directional fashion, could lead a STA to associate to an AP that would offer worse performance than another AP, had the gains from the AA systems been taken into account.

With the above example, the data collected by a STA when scanning the RF environment allows it to estimate which AP will be able to provide the best radio link, taking into consideration the gains that the AA systems will offer when traffic frames are transmitted.

Beam Indicator

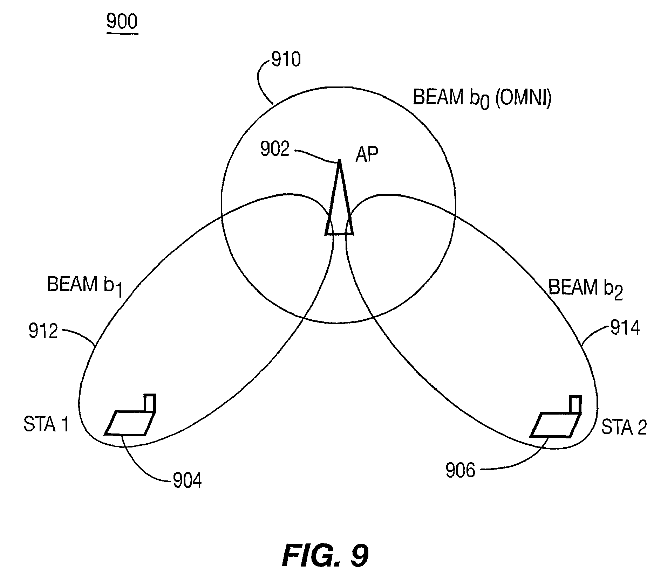

Figure 9 is a diagram showing a system 900 operating in accordance with an example. The system 900 includes an AP 902, a first STA (STA 1) 904 and a second STA (STA 2) 906. The AP 902 transmits on an omni-directional beam (or pattern; $b_0$) 910, a first directional beam ($b_1$) 912 with STA 1 904, and a second directional beam ($b_2$) 914 with STA 2 906. While the omni-directional beam 910 may be able to be received by STA 1 904 and STA 2 906 (albeit faintly), the directional beams 912, 914 are better choices.

A new field, hereinafter called a "beam indicator", is added after the Physical Layer Convergence Protocol (PLCP) header of most of the packets sent from a STA to an AP, indicating to the AP which of its beams (or antennas) it should select to receive the remainder of the packet (the MAC protocol data unit (PDU)). It is noted that the beam indicator does not need to be sent with all packets from the STA to the AP because certain packets (such as an acknowledgement (ACK) or a CTS) are expected to be received by the AP from a particular STA. If the AP knows in advance which STA will be sending the next packet, it can select the optimal beam for receiving that packet, and the beam indicator is not necessary. However, the beam indicator may also be transmitted in those packets.

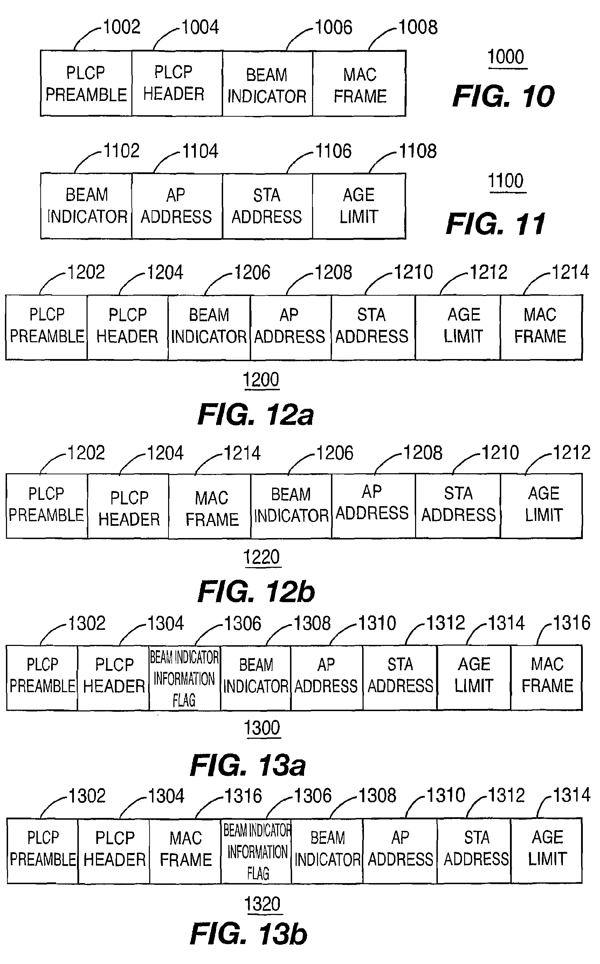

Figure 10 is a diagram of a frame format 1000 including the beam indicator information sent by a STA. The frame 1000 is a modified version of a PLCP PDU (PPDU) and includes a PLCP preamble 1002, a PLCP header 1004, a beam indicator field 1006, and a MAC frame 1008.

This information is provided by the STA transmitting the packet 1000, at the minimum data rate. The AP uses its omni-directional antenna to decode the PLCP header 1004 and the beam indicator field 1006. After decoding the beam indicator field 1006, the AP selects the corresponding beam to receive the remainder of the packet 1008, without having to know the identity of the STA sending the packet 1000.

The beam indicator 1006 is an integer between 0 and $N_{amax}$, where $N_{amax}$ is the maximum number of beams that the AP can use. The value of $N_{amax}$ may be either fixed for all devices compatible with the system, or signaled by the AP in beacon frames, probe response frames, or other management frames. Preferably, $N_{amax}$ is a relatively small integer (i.e., 7 or 15) so as to limit the number of additional bits required for the beam indicator field 1006. One of the values is preferably reserved as a default value for situations when the STA does not know what value to use in the beam indicator field 1006. When this default value is used, the AP may simply use a beam that is not pointed in a specific direction (such as an omni-directional pattern).

The STA determines which value to use in the beam indicator field 1006 based on information provided by the AP in prior AP-to-STA signaling. The required information for this signaling consists of the beam indicator itself, along with the AP and STA MAC addresses. Optionally, an "age limit" may be added to indicate to the STA a maximum time beyond which the beam indicator information is deemed unreliable or invalid. The age limit may be a fixed value, or may be signaled from beacon frames, probe response frames, or other management frames. In the latter case, the age limit may be set adaptively by the AP based on STA mobility considerations.

There are several signaling possibilities for the AP to transfer the beam indicator information to the STA. One method is for the AP to send a special packet (a beam indicator message) containing only the information required for this purpose (AP and STA addresses, beam indicator, optional age limit). Figure 11 is a diagram of a beam indicator message 1100 sent by an AP. The message 1100 includes a beam indicator field 1102, an AP address field 1104, a STA address field 1106, and an optional age limit field 1108. The order of the fields 1102-1108 is exemplary, and the fields 1102-1108 of the message 1100 can be in any order.

In a unicast situation, the STA preferably sends back an ACK so that the AP can re-transmit the packet 1100 if the STA did not successfully receive it. If the AP has to update the beam indicator for several STAs, it may send a multicast message for these STAs containing their respective beam indicator values.

Another signaling possibility is for the AP to insert or piggyback the required information onto a packet containing other data destined to the STA. The information could be added after the PLCP header, after the MAC PDU, or as another field in the MAC header. Figures 12a and 12b are diagrams of frame formats 1200, 1220 including the beam indicator information sent by an AP. The frames 1200, 1220 are modified versions of the PPDU.

Figure 12a shows a frame 1200 that adds the beam indicator information after the PLCP header. The frame 1200 includes a PLCP preamble 1202, a PLCP header 1204, a beam indicator field 1206, an AP address field 1208, a STA address field 1210, an optional age limit field 1212, and a MAC frame 1214.

Figure 12b shows a frame 1220 that adds the beam indicator information after the MAC frame 1214. The fields of the frame 1220 are the same as the frame 1200, with the difference being the order of the fields.

Another signaling possibility is to add a flag indicating whether the beam indicator information is present or not. This flag would allow the AP to not send the beam indicator information in every packet destined to the STA. The beam indicator information can be sent periodically (for example, once every five seconds) and/or on an event driven basis (for example, on a change in the transmitted beam at the AP to a certain STA).

Figures 13a and 13b are diagrams of alternate frame formats 1300, 1320 including the beam indicator information sent by an AP, incorporating the beam indicator information flag. The frames 1300, 1320 are modified versions of the PPDU. Figure 13a shows a frame 1300 including a PLCP preamble 1302, a PLCP header 1304, a beam indicator information flag 1306, a beam indicator field 1308, an AP address field 1310, a STA address field 1312, an optional age limit field 1314, and a MAC frame 1316. The flag 1306 is set only if the beam indicator information (fields 1308-1314) is provided in the frame 1300.

Figure 13b shows a frame 1320 that adds the beam indicator information after the MAC frame 1316. The fields of the frame 1320 are the same as the frame 1300, with the difference being the order of the fields.

The STA fills the beam indicator field 1006 in the STA-to-AP transmissions (packet 1000) with the latest beam indicator (1102, 1206, 1308) signaled by the AP for this STA, if this latest signaling was received before its age limit expired (or at all). Otherwise, the STA fills the beam indicator field 1006 with the default value, as mentioned above. For each value of the beam indicator, the AP knows which of its beams (or antennas) the indicator corresponds to; the STA does not need to know this correspondence.

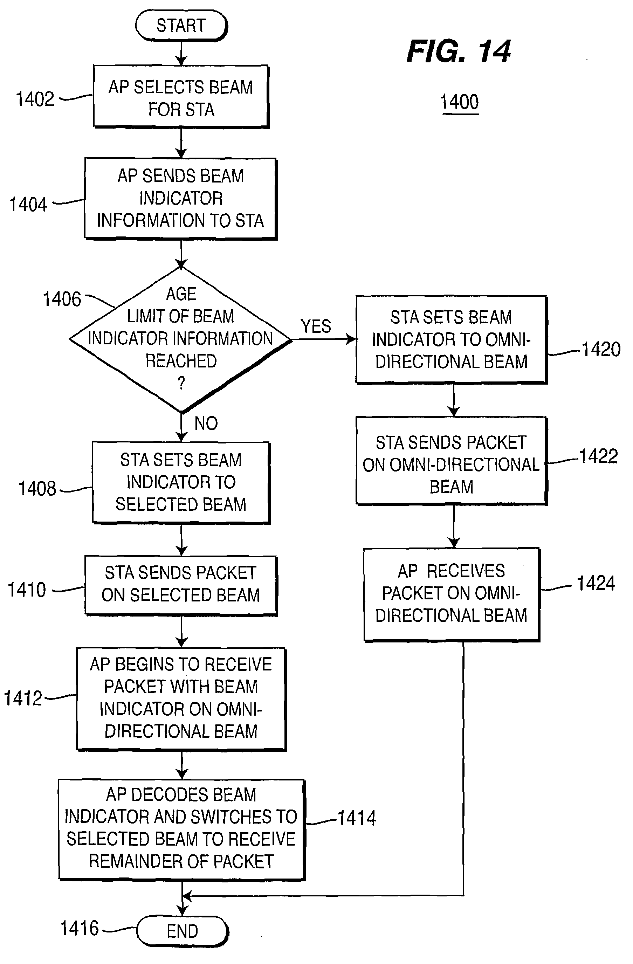

Figure 14 is a flowchart of a method 1400 for transmitting smart antenna information by an AP and a STA. The method 1400 begins by the AP selecting a beam for communication to the STA and selecting the beam indicator corresponding to the selected beam (step 1402). Preferably, although not mandatory, the AP chooses the beam that maximizes the signal level or the signal-to-interference ratio (SIR) at its receiver. There are a variety of methods by which the AP can learn which beam maximizes the SIR for a specific STA.

For example, the AP may try different beams when receiving packets that are expected from a particular STA, and pick the beam that resulted in the best quality of the received signal. Examples of expected packets include: an ACK following the transmission of a data packet to a particular STA, and a CTS packet following the transmission of an RTS packet to a particular STA. With expected packets, it may not be necessary for the STA to add the beam indicator field 1006 after the PLCP header 1004 because the packets are expected by the AP to be sent by a certain STA, and therefore the AP would already know which beam to use.

The AP then sends the beam indicator information to the STA (step 1404). The beam indicator information (as explained in greater detail above) includes the beam indicator, the AP's address, the STA's address, and an optional age limit for expiration of the beam indicator information. The method 1400 assumes that the age limit is present in the beam indicator information.

A determination is made by the STA if the age limit of the beam indicator information has been reached; i.e.,

whether the beam indicator information is still valid (step 1406). If the age limit has not been reached, then the STA sets the beam indicator for a packet to be transmitted to the selected beam (step 1408). The STA sends the packet with the beam indicator information on the selected beam (step 1410). The AP begins to receive the packet from the STA on the omni-directional beam (step 1412). The AP decodes the beam indicator information contained in the packet and switches the antenna to the selected beam to receive the remainder of the packet (step 1414). The method then terminates (step 1416).

If the age limit of the beam indicator information has been reached; i.e., the beam indicator information is no longer valid (step 1406), then the STA sets the beam indicator for a packet to be transmitted to the omni-directional beam (or pattern; step 1420). The STA then sends the packet on the omni-directional beam (step 1422). The AP receives the packet on the omni-directional beam (step 1424) and the method terminates (step 1416). Because the packet is being transmitted on the omni-directional beam (since the packet from the STA does not include the beam indicator information or the STA has set the beam indicator to the default value), there is no need for the AP to change its antenna beam.

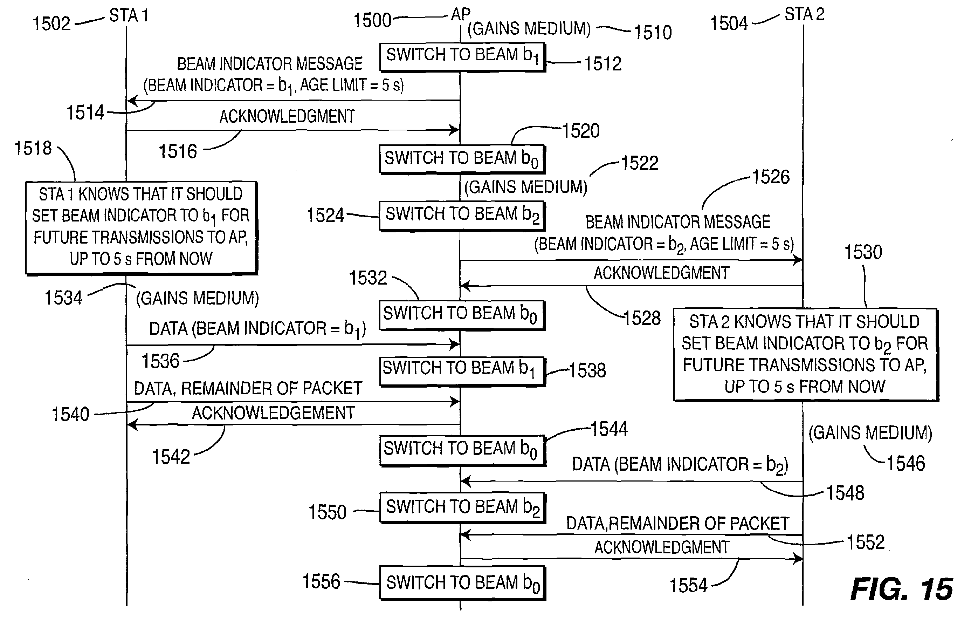

Figure 15 shows an example of the method 1400. In this example, it is assumed that the AP 1500 has already decided that the best beams for communicating with STA 1 1502 and STA 2 1504 are $b_1$ and $b_2$, respectively (as shown in Figure 9).

Figure 15 shows a possible sequence of events where STA 1 1502, STA 2 1504, and the AP 1500 communicate with each other. First, the AP desires to transmit a packet to STA 1. After gaining access to the medium (step 1510), the AP switches to beam $b_1$ (step 1512) and transmits a data packet to STA 1 including a beam indicator message, with the beam indicator ($b_1$) and an age limit for the use of this beam indicator (five seconds; step 1514). STA 1 then sends an ACK to the AP (step 1516). From that time (and up to five seconds from that time), STA 1 knows that if it has to transmit a packet (1000, as shown in Figure 10) to the AP, it should set the beam indicator field (1006) to $b_1$ (step 1518). After receiving the ACK from STA 1, the AP switches its antenna to an omni-directional pattern (bo; step 1520).

Next, the AP gains access to the medium again (step 1522) and switches to beam $b_2$ (step 1524) in order to transmit a packet to STA 2, including a beam indicator message, with the beam indicator ($b_2$) and an age limit for the use of this beam indicator (five seconds; step 1526). STA 2 then sends an ACK to the AP (step 1528). STA 2 knows that it should set the beam indicator field (1006) to $b_2$ for any packet it transmits to the AP (other than an ACK or a CTS), for up to five seconds from that time (step 1530). After receiving the ACK from STA 2, the AP switches its antenna to an omni-directional pattern (bo; step 1532).

STA 1 then gains access to the medium (step 1534) and transmits a data packet to the AP with the beam indicator field (1006) set to $b_1$ (assuming less than five seconds has elapsed; step 1536). After decoding the beam indicator field, the AP immediately switches to beam $b_1$ (step 1538) to decode the remainder of the packet (step 1540). After the end of the packet reception, the AP sends an ACK to STA 1 (step 1542) and switches its antenna to the omni-directional pattern ($b_0$; step 1544).

Then STA 2 gains access to the medium (step 1546) and transmits a data packet to the AP with the beam indicator field (1006) set to $b_2$ (assuming less than five seconds has elapsed; step 1548). After decoding beam indicator field, the AP immediately switches to beam $b_2$ (step 1550) to decode the remainder of the packet (step 1552). After the end of the packet reception, the AP sends an ACK to STA 1 (step 1554) and switches its antenna to the omni-directional pattern (bo; step 1556).

It is noted that if the age limit of the beam indicator information has expired (five seconds in this example), a STA (either STA 1 or STA 2) would set the beam indicator field (1006) to $b_0$ (the default value).

An example allows taking advantage of the smart antenna at the AP without resulting in any major inconvenience. The addition of the beam indicator field in the PLCP header does not result in excessive overhead, since the number of possible beams can usually be limited to eight or less (e.g., three or four bits for the beam indicator field).

For backward compatibility purposes, a field of the PLCP header may be given a new value for the packets transmitted from STAs implementing an example, so that the AP can determine if an incoming packet was transmitted from a STA implementing the example or not. For example, one of the currently reserved bits in the "service" field of the PLCP header could be used to indicate whether the STA implements this example (and therefore if there will be a beam indicator field after the PLCP header). If not, the AP knows that it should not expect the beam indicator field after the PLCP header and could simply use the omni-directional pattern to decode the remainder of the packet.

The example also applies in the case of a mesh architecture where a mesh node is susceptible of receiving packets from more than one other mesh node. In that case, a mesh node plays the role of a STA and of an AP as described above. This means that a mesh node A uses the beam indicator field when transmitting to another mesh node B, using the value of the beam indicator that mesh node B has previously signaled to mesh node A. Conversely, mesh node B uses the beam indicator field when transmitting to mesh node A, using the value of the beam indicator that mesh node A has previously signaled to mesh node B.

As an alternative to having a beam indicator field after the PLCP header, the STA could add its address after the PLCP header. This is not as efficient a solution because the STA address is 48 bits long, compared with three or four bits for the beam indicator. Another alternative would be to replace the beam indicator field with an arbitrary STA index assigned by the AP to the STA upon association and/or higher layer signaling thereafter. The STA index could be relatively short (less than ten bits at its maximum value), depending on the maximum number of associated STAs. The AP would look up and use the current best beam for the STA index specified in the preamble. The AP would not need to then signal a beam indicator to the STA in every AP-to-STA packet, but there would be more additional bits after the PLCP preamble.

Antenna Capability Information

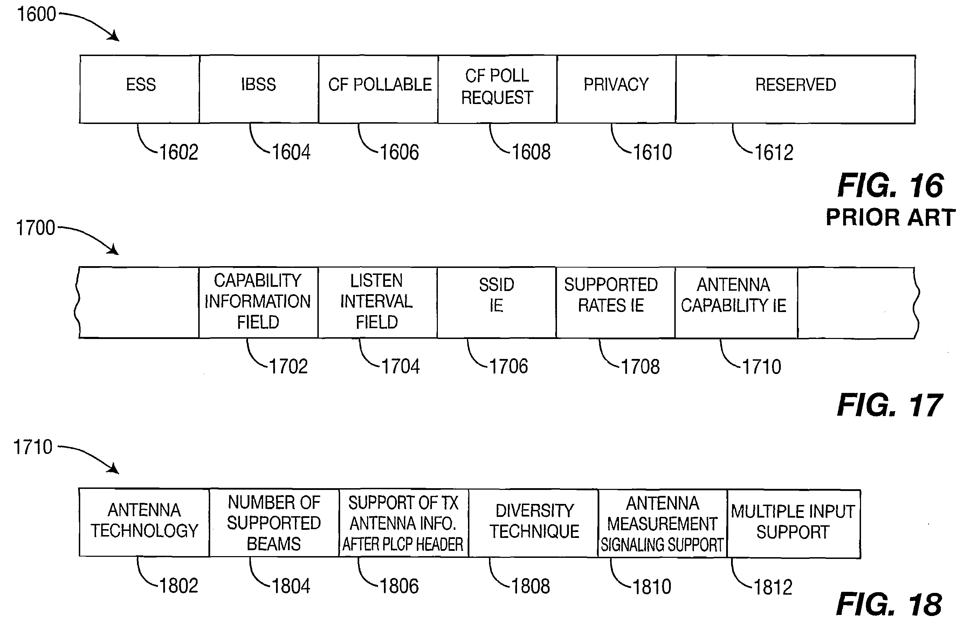

A capability information field 1600, as used in a beacon frame, an association request frame, an association response frame, and a probe response frame, has some reserved bits, as shown in Figure 16. The capacity information field 1600 includes an extended service set (ESS) subfield 1602, an IBSS subfield 1604, a contention free (CF) pollable subfield 1606, a CF poll request subfield 1608, a privacy subfield 1610, and a number of reserved bits 1612. In the 802.11 standards, the subfields 1602-1610 are each one bit long and there are 11 reserved bits 1612.

The present invention utilizes one of the reserved bits 1612 for transferring antenna capability information by using one of the reserved bits as a flag to indicate whether antenna capability information will be transmitted. The details of an antenna's capabilities are part of an additional IE, which is attached to the end of the packet if the antenna capability information flag is set.

The antenna capability information IE can be included as part of an association request frame, an association response frame, a probe request frame, and a probe response frame. An example of a portion of an association request frame 200 including this new IE is shown in Figure 17. The frame 1700 includes a capability information field 1702, a listen interval field 1704, a SSID IE 1706, a supported rates IE 1708, and an antenna capability IE 1710. Alternatively, the antenna capability IE 1710 can be added to any management frame, such as a reassociation request, a reassociation response, or a beacon; to any control frame; or to data packets. In a preferred embodiment, the antenna capability IE 1710 is sent in a management frame. If the antenna capability IE 1710 is added to the probe request frame and the probe response frame, a STA can use this information before initiating an association procedure with an AP.

The antenna capability IE 1710 is shown in detail in Figure 18 and includes, but is not limited to, an antenna technology field 1802, a number of supported beams field 1804, a field to indicate support of transmit antenna information after the PLCP header 1806, a diversity technique field 1808, a field to indicate support of antenna measurement signaling 1810, and a field to indicate support for multiple inputs 1812. Additional antenna capability information may also be included in the IE 1710.

In one embodiment, the minimum amount of information to be exchanged includes the antenna technology field 1802, and the rest of the fields may be optional. It may be possible to derive the remaining fields (i.e., fields 1804-1812) once the antenna technology type is known.

After one side (either AP or STA) receives the antenna capability information from the transmitting side, the receiving side adjusts local settings for transmission and/or reception such as number of antennas used, diversity method, smart antenna technologies used for transmission/reception, and extra antenna measurements.

In the event that the receiving side cannot support the antenna capabilities of the transmitting side, the transmitting side will not be able to use the particular antenna features. Certain antenna technologies will operate properly only if both the transmitting side and the receiving side are capable of utilizing the technology. One example is MIMO technology, which only works if supported on both sides.

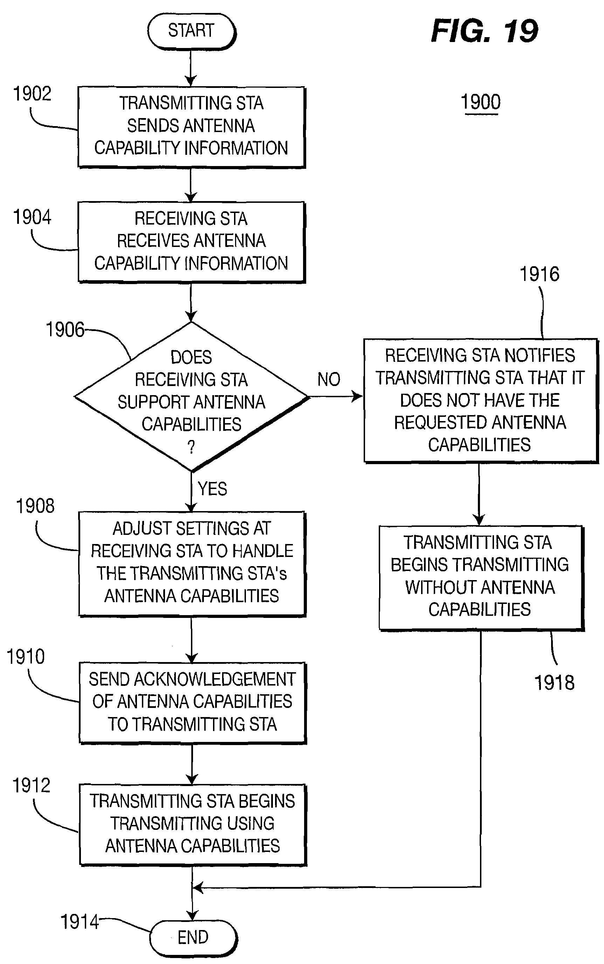

Figure 19 shows a method 1900 for exchanging antenna capability information. For purposes of discussion of the method 1900, the terms "transmitting STA" and "receiving STA" are used. It is noted that both the transmitting STA and the receiving STA can be an AP or a STA, such that an exchange of antenna capability information can occur between an AP and a STA or between two STAs, in either direction.

The method 1900 begins with the transmitting STA sending its antenna capability information to the receiving STA in an antenna capability IE (step 1902). The receiving STA receives the antenna capability IE (step 1904) and determines whether it can support the requested antenna capabilities. If the receiving STA can support the antenna capabilities of the transmitting STA (step 1906), then the receiving STA adjusts its settings to handle the transmitting STA's antenna capabilities (step 1908). The receiving STA sends an acknowledgement of its antenna capabilities to the transmitting STA (step 1910).

In an alternate embodiment of the method 1900, the acknowledgement is sent to the transmitting STA before the receiving STA adjusts its settings (i.e., steps 1908 and 1910 are switched). While this message is an acknowledgement of the receiving STA's antenna capabilities, it is not necessarily an ACK signal. If the receiving STA has some, but not all, of the capabilities of the transmitting STA, negotiation of capabilities can occur to achieve a common set of capabilities to be used. In a preferred embodiment, the capabilities used will be the smaller capability set belonging to both STAs.

The transmitting STA begins transmitting using the communicated antenna capabilities (step 1912) and the method terminates (step 1914).

If the receiving STA does not support the transmitting STA's antenna capabilities (step 1906), then the receiving STA notifies the transmitting STA that it does not have the requested antenna capabilities (step 1916). The transmitting STA begins transmitting without using the requested antenna capabilities (step 1918) and the method terminates (step 1914).

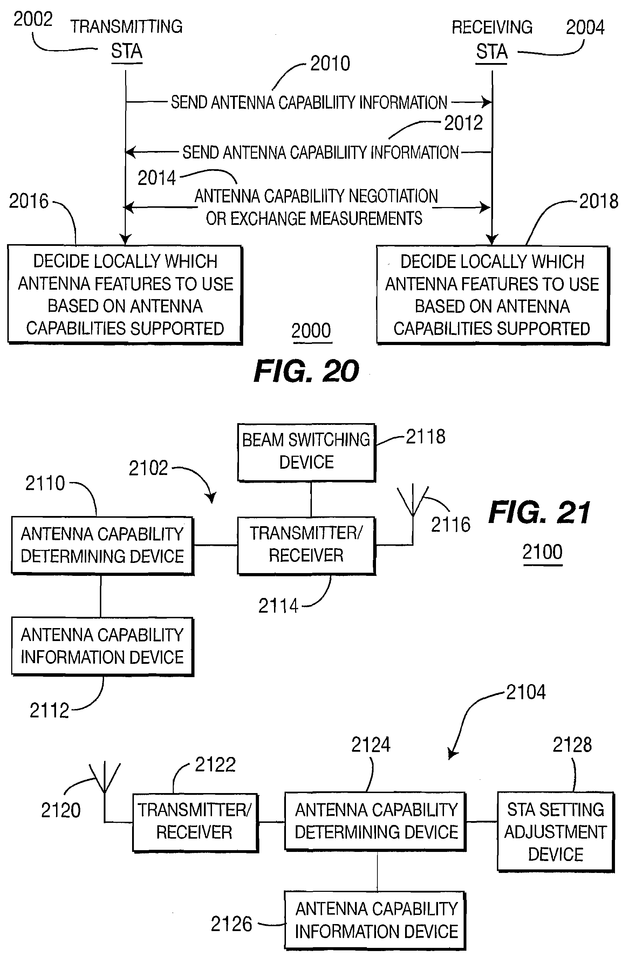

Figure 20 is a flow diagram of an alternate method 2000 for exchanging antenna capability information between a transmitting STA 2002 and a receiving STA 2004. The transmitting STA 2002 sends its antenna capability information to the receiving STA 2004 (step 2010). The receiving STA 2004 sends its antenna capability information to the transmitting STA 2002 (step 2012). It is noted that steps 2010 and 2012 can be performed in reverse order. The ordering of steps 2010 and 2012 is not critical, as long as the antenna capability information is exchanged between the transmitting STA 2002 and the receiving STA 2004. Optionally, the transmitting STA 2002 and the receiving STA 2004 can negotiate antenna capabilities to find a common antenna capability set or can exchange measurement information (step 2014). This optional step can be used to refine the set of antenna features to be used.

After the exchange of antenna information (steps 2010, 2012) and any additional information exchange (step 2014), both the transmitting STA 2002 and the receiving STA 2004 decide locally which antenna features to use based on the antenna capabilities that are supported locally (steps 2016, 2018).

While the transfer of antenna capability information has been described in terms of a WLAN, the principles of this concept are equally applicable to any type of wireless communication system.

System Implementation

Figure 21 is a block diagram of a system 2100 configured to implement the various aspects of the present invention. The system 2100 includes an AP 2102 and a STA 2104. The AP 2102 includes an antenna capability determining device 2110 which determines the antenna capabilities of the AP 2102 by examining antenna capability information stored in an antenna capability information device 2112 that is connected to the antenna capability determining device 2110. The antenna capabilities of the AP 2102 are sent out by a transmitter/receiver 2114 connected to the antenna capability determining device 2110 and an antenna 2116 connected to the transmitter/receiver 2114. A beam switching device 2118 is connected to the transmitter/receiver 2114 and is used to switch the beams of the antenna 2116.

The STA 2104 receives the antenna capability information of the AP 2102 via an antenna 2120 and a transmitter/receiver 2122 connected to the antenna 2120. An antenna capability determining device 2124 is connected to the transmitter/receiver 2122 and compares the antenna capabilities of the AP 2102 with the antenna capability information of the STA 2104 by accessing an antenna capability information device 2126 which is connected to the antenna capability determining device 2124. The antenna capability determining device 2124 is connected to a STA setting adjustment device 2128, which adjusts the settings of the STA 2104 in order to utilize the smart antenna capabilities.

It is noted that a negotiation of antenna capabilities between the AP 2102 and the STA 2104 can occur via the respective antenna capability determining devices 2110, 2124. While the system 2100 has been described as using an AP 2102, the AP 2102 can instead be another STA in the system 2100.

Examples

A method for implementing a smart antenna in establishing association between a STA and an AP includes the steps of: (a) transmitting a beacon frame by the AP on one antenna beam; (b) receiving the beacon frame at the STA; (c) measuring a signal quality of the beacon frame at the STA; (d) switching to a different antenna beam; (e) repeating steps (a) - (d) until the beacon frame has been transmitted on all antenna beams; and (f) associating the STA to the AP that transmits the beacon frame with the highest signal quality on one of its antenna beams.

A method for implementing a smart antenna in establishing association between a STA and an AP includes the steps of: (a) sending a probe request frame from the STA to the AP, the probe request frame including an indication whether the STA wants to scan multiple beams from the AP; (b) transmitting a probe response frame from the AP to the STA on one antenna beam; (c) receiving the probe response frame at the STA; (d) measuring a signal quality of the probe response frame at the STA; (e) switching to a different antenna beam; (f) repeating steps (b) - (e) until the probe response frame has been transmitted on all antenna beams; and (g) associating the STA to the AP that transmits the probe response frame with the highest signal quality on one of its antenna beams.

The method according to one of the preceding two paragraphs, wherein the method waits for an interval before transmitting the beacon frame after switching antenna beams, and wherein the interval is greater than a short inter-frame space and less than a distributed inter-frame space.

A system for implementing a smart antenna in establishing association between a STA and an AP) including a beacon frame sent from the AP to the STA.

A system for implementing a smart antenna in establishing association between a STA and an AP including: a probe request frame sent from the STA to the AP, the probe request frame including an indication whether the STA wants to scan multiple antenna beams from the AP; and a probe response frame sent from the AP to the STA.

Any one of the preceding examples, the beacon frame or the probe response frame includes a field identifying the total number of antenna beams and/or a field identifying the current antenna beam.

A method for supporting use of a smart antenna in a WLAN including an AP and a STA, the method including the steps of: selecting an antenna beam by the AP to use for communication with the STA; sending the selected beam information from the AP to the STA; and transmitting a packet from the STA to the AP, the packet including the selected beam information, whereby the AP uses the selected beam to receive at least a part of the packet.

The method according to the preceding paragraph, wherein the selecting step includes selecting an antenna beam with a maximum signal level or an antenna beam with a maximum signal to interference ratio.

The method according to one of the preceding two paragraphs, wherein the sending step includes sending one or more of: a beam indicator; an age limit for the beam indicator, wherein the selected beam will only be used if the age limit has not expired; the AP's medium access control (MAC) address; and the STA's MAC address.

The method according to one of the preceding three paragraphs, wherein the sending step includes sending the selected beam information in a separate message.

The method according to one of the preceding four paragraphs, wherein the sending step includes sending the selected beam information as part of an existing frame type.

The method according to one of the preceding five paragraphs, wherein the sending step further includes sending a beam indicator information flag, to indicate the presence of selected beam information in the frame.

The method according to one of the preceding six paragraphs, wherein the sending step includes switching the antenna of the AP to the selected beam prior to sending the selected beam information.

The method according to one of the preceding seven paragraphs, wherein the sending step further includes switching the antenna of the AP to an omni-directional pattern after sending the selected beam information on the selected beam.

The method according to one of the preceding eight paragraphs, further including the step of sending an acknowledgement from the STA to the AP upon successful receipt of the selected beam information.

The method according to one of the preceding nine paragraphs, further including the steps of: receiving a first part of the packet at the AP via an omni-directional beam, the first part of the packet including the selected beam information; switching the antenna of the AP to the selected beam as specified in the selected beam information; and receiving a second part of the packet at the AP via the selected beam.

The method according to one of the preceding ten paragraphs, wherein the switching step includes decoding the first part of the packet to determine the selected beam.

A system for supporting use of a smart antenna in a WLAN including an AP and a STA, the system including: a first packet, sent from the AP to the STA, the first packet including a selected beam indicator, a medium access control (MAC) address of the AP, and a MAC address of the STA, the selected beam indicator identifying an antenna beam selected by the AP to use for communication with the STA; and a second packet, sent from the STA to the AP, the second packet including the selected beam indicator, whereby the AP receives at least a part of the second packet via the selected beam.

The system according to the previous paragraph, wherein the first packet is sent as a separate message from the AP to the STA.

The system according to one of the preceding two paragraphs, wherein the first packet is part of an existing frame type.

The system according to one of the preceding three paragraphs, wherein the first packet further includes an age limit for the selected beam indicator, wherein the selected beam will only be used if the age limit has not expired.

The system according to one of the preceding four paragraphs, wherein the first packet further includes a beam indicator information flag, to indicate the presence of the selected beam indicator in the packet.

The system according to one of the preceding five paragraphs, wherein: a first part of the second packet is received at the AP via an omni-directional beam, the first part of the second packet including the selected beam indicator; the AP switches its antenna to the selected beam as specified in the selected beam indicator; and a second part of the second packet is received at the AP via the selected beam.

A system for exchanging smart antenna capability information between a transmitting STA and a receiving STA in a wireless communication system, including an antenna capability information element, exchanged between the transmitting STA and the receiving STA prior to data transmission between the two STAs, the antenna capability information element including information regarding the capabilities of the two STAs.

The system according to the preceding paragraph, wherein the wireless communication system is a WLAN, the transmitting STA is an AP or a STA in the WLAN, and the receiving STA is a STA in the WLAN or an AP.

The system according to one of the preceding two paragraphs, wherein the antenna capability information element includes an antenna technology field and at least one field selected from the group consisting of a number of supported beams, an indicator of support of transmit antenna information after physical layer convergence protocol header, an indicator of diversity technique, an indicator of antenna measurement signaling support, and an indicator of multiple input support.

The system according to one of the preceding two paragraphs, wherein each field is derived by the receiving STA from the antenna technology field.

The system according to one of the preceding three paragraphs, wherein the antenna capability information element is sent as part of a management frame, a control frame, or a data frame.

The system according to one of the preceding four paragraphs, wherein the antenna capability information element is exchanged between the transmitting STA and the receiving STA at any time after association between the transmitting STA and the receiving STA or at any time after a data transfer between the transmitting STA and the receiving STA.

A method for exchanging smart antenna capability information between a transmitting STA and a receiving STA in a wireless communication system, including the steps of: sending antenna capability information from the transmitting STA to the receiving STA; determining whether the receiving STA can support the antenna capabilities of the transmitting STA; adjusting settings at the receiving STA if the receiving STA can support the antenna capabilities of the transmitting STA; and transmitting data from the transmitting STA to the receiving STA using the antenna capabilities if the receiving STA can support the antenna capabilities of the transmitting STA.

The method according to the preceding paragraph, further including the step of replying to the transmitting STA with an acknowledgement of the receiving STA's antenna capabilities.

The method according to one of the preceding two paragraphs, wherein the replying step is performed prior to the adjusting step or after the adjusting step.

The method according to one of the preceding three paragraphs, wherein the replying step includes notifying the transmitting STA that the receiving STA does not have the requested antenna capabilities.

The method according to one of the preceding four paragraphs, wherein the transmitting step includes transmitting data from the transmitting STA to the receiving STA without using the antenna capabilities.

The method according to one of the preceding five paragraphs, wherein the sending step includes sending the antenna capability information as part of a management frame.

The method according to one of the preceding six paragraphs, wherein the adjusting step includes adjusting at least one setting selected from the group consisting of a number of antennas used, a diversity method, a smart antenna technology used, and additional antenna measurements.

A method for exchanging smart antenna capability information between a first STA and a second STA in a wireless communication system, including the steps of: sending antenna capability information from the first STA to the second STA; and sending antenna capability information from the second STA to the first STA.

The method according to the preceding paragraph, further including the step of deciding locally, at the first STA and at the second STA, on the antenna capabilities to use for future transmission and reception between the first STA and the second STA.

The method according to one of the preceding two paragraphs, wherein the deciding step is performed without any additional communication between the first STA and the second STA.

The method according to one of the preceding three paragraphs, further including the step of comparing the antenna capabilities of the first STA and the second STA, wherein the deciding step includes using the antenna capabilities that are supported by both the first STA and the second STA.

The method according to one of the preceding four paragraphs, further comprising the step of exchanging measurement information between the first STA and the second STA, the exchanging step being performed prior to the deciding step.

The method according to one of the preceding five paragraphs, further comprising the step of negotiating antenna capability information between the first STA and the second STA, the negotiating step being performed prior to the deciding step.

A system for implementing smart antenna features in a WLAN includes an AP and a STA. The AP includes a first antenna capability determining device; a first antenna capability information device connected to the first antenna capability determining device, the first antenna capability determining device configured to determine the antenna capabilities of the AP by examining information stored in the first antenna capability information device; a first transmitter/receiver connected to the first antenna capability determining device; a first antenna connected to the transmitter/receiver; and a beam switching device connected to the transmitter/receiver, said beam switching device configured to switch beams of the first antenna. The STA includes a second antenna; a second transmitter/receiver connected to the second antenna, the second transmitter/receiver configured to receive antenna capability information from the AP; a second antenna capability determining device connected to the second transmitter/receiver; a second antenna capability information device connected to the second antenna capability determining device, the second antenna capability determining device configured to compare the antenna capabilities of the AP received from the second transmitter/receiver with the antenna capabilities of the STA retrieved from the second antenna capability information device; and a STA

13

setting adjustment device connected to the second antenna capability determining device, the STA setting adjustment device configured to adjust the settings of the STA to utilize smart antenna capabilities.

The system according to the preceding paragraph, wherein the first antenna capability determining device and the second antenna capability determining device are configured to negotiate a level of antenna capabilities that both the AP and the STA can support.

Although the features and elements of the present invention are described in the preferred embodiments in particular combinations, each feature or element can be used alone (without the other features and elements of the preferred embodiments) or in various combinations with or without other features and elements of the present invention. While specific embodiments of the present invention have been shown and described, many modifications and variations could be made by one skilled in the art without departing from the scope of the invention. The above description serves to illustrate and not limit the particular invention in any way.

**Itemized list of examples**

Any reference to embodiments herein which do not fall within the scope of the appended claims should be construed as serving merely for facilitating the understanding of this disclosure.

1. A method for implementing a smart antenna in establishing association between a station (STA) and an access point (AP) in a wireless local area network, comprising the steps of:

(a) transmitting a beacon frame by the AP on one antenna beam;
(b) receiving the beacon frame at the STA;
(c) measuring a signal quality of the beacon frame at the STA;
(d) switching to a different antenna beam;
(e) repeating steps (a) - (d) until the beacon frame has been transmitted on all antenna beams; and
(f) associating the STA to the AP that transmits the beacon frame with the highest signal quality on one of its antenna beams.

2. The method according to item 1, wherein the beacon frame includes a field identifying the total number of antenna beams.

3. The method according to item 1, wherein the beacon frame includes a field identifying the current antenna beams.

4. The method according to item 1, wherein the method waits for an interval before transmitting the beacon frame after switching antenna beams.

5. The method according to item 4, wherein the interval is greater than a short inter-frame space and less than a distributed inter-frame space.

6. A method for implementing a smart antenna in establishing association between a station (STA) and an access point (AP) in a wireless local area network, comprising the steps of:

(a) sending a probe request frame from the STA to the AP, the probe request frame including an indication whether the STA wants to scan multiple beams from the AP;
(b) transmitting a probe response frame from the AP to the STA on one antenna beam;
(c) receiving the probe response frame at the STA;
(d) measuring a signal quality of the probe response frame at the STA;
(e) switching to a different antenna beam;
(f) repeating steps (b) - (e) until the probe response frame has been transmitted on all antenna beams; and
(g) associating the STA to the AP that transmits the probe response frame with the highest signal quality on one of its antenna beams.

7. The method according to item 6, wherein the probe response frame includes a field identifying the total number of antenna beams.

8. The method according to item 6, wherein the probe response frame includes a field identifying the current antenna beam.

9. The method according to item 6, wherein the method waits for an interval before transmitting the beacon frame after switching antenna beams.

10. The method according to item 9, wherein the interval is greater than a short inter-frame space and less than a distributed inter-frame space.

11. A system for implementing a smart antenna in establishing association between a station (STA) and an access point (AP) in a wireless local area network, comprising:

   a beacon frame sent from the AP to the STA, said beacon frame including:

      a field to identify a total number of antenna beams on which a transmission will be made; and

      a field to identify the beam that is currently being transmitted on.

12. A system for implementing a smart antenna in establishing association between a station (STA) and an access point (AP) in a wireless local area network, comprising:

   a probe request frame sent from the STA to the AP, said probe request frame including an indication whether the STA wants to scan multiple antenna beams from the AP; and
   a probe response frame sent from the AP to the STA, said probe response frame including:

      a field to identify a total number of antenna beams on which a transmission will be made; and
      a field to identify the beam that is currently being transmitted on.

13. A method for supporting use of a smart antenna in a wireless local area network (WLAN), the WLAN including an access point (AP) and a station (STA), the method comprising the steps of:

   selecting an antenna beam by the AP to use for communication with the STA;
   sending the selected beam information from the AP to the STA; and
   transmitting a packet from the STA to the AP, the packet including the selected beam information, whereby the AP uses the selected beam to receive at least a part of the packet.

14. The method according to item 13, wherein the selecting step includes selecting an antenna beam with a maximum signal level.

15. The method according to item 13, wherein the selecting step includes selecting an antenna beam with a maximum signal to interference ratio.

16. The method according to item 13, wherein the sending step includes sending a beam indicator, the AP's medium access control (MAC) address, and the STA's MAC address.

17. The method according to item 16, wherein the sending step further includes sending an age limit for the beam indicator, wherein the selected beam will only be used if the age limit has not expired.

18. The method according to item 13, wherein the sending step includes sending the selected beam information in a separate message.

19. The method according to item 13, wherein the sending step includes sending the selected beam information as part of an existing frame type.

20. The method according to item 19, wherein the sending step further includes sending a beam indicator information flag, to indicate the presence of selected beam information in the frame.

21. The method according to item 13, wherein the sending step includes switching the antenna of the AP to the selected beam prior to sending the selected beam information.

22. The method according to item 21, wherein the sending step further includes switching the antenna of the AP to an omni-directional pattern after sending the selected beam information on the selected beam.

23. The method according to item 13, further comprising the step of:

sending an acknowledgement from the STA to the AP upon successful receipt of the selected beam information.

24. The method according to item 13, further comprising the steps of:

receiving a first part of the packet at the AP via an omni-directional beam, the first part of the packet including the selected beam information;
switching the antenna of the AP to the selected beam as specified in the selected beam information; and
receiving a second part of the packet at the AP via the selected beam.

25. The method according to item 24, wherein the switching step includes decoding the first part of the packet to determine the selected beam.

26. A system for supporting use of a smart antenna in a wireless local area network (WLAN), the WLAN including an access point (AP) and a station (STA), the system comprising:

a first packet, sent from the AP to the STA, said first packet including a selected beam indicator, a medium access control (MAC) address of the AP, and a MAC address of the STA, said selected beam indicator identifying an antenna beam selected by the AP to use for communication with the STA; and
a second packet, sent from the STA to the AP, said second packet including said selected beam indicator, whereby the AP receives at least a part of said second packet via the selected beam.

27. The system according to item 26, wherein said first packet is sent as a separate message from the AP to the STA.

28. The system according to item 26, wherein said first packet is part of an existing frame type.

29. The system according to item 26, wherein said first packet further includes an age limit for said selected beam indicator, wherein the selected beam will only be used if said age limit has not expired.

30. The system according to item 26, wherein said first packet further includes a beam indicator information flag, to indicate the presence of said selected beam indicator in said packet.

31. The system according to item 26, wherein:

a first part of said second packet is received at the AP via an omni-directional beam, said first part of said second packet including said selected beam indicator;
the AP switches its antenna to the selected beam as specified in said selected beam indicator; and
a second part of said second packet is received at the AP via the selected beam.

32. A system for exchanging smart antenna capability information between a transmitting station and a receiving station in a wireless communication system, comprising:

an antenna capability information element, exchanged between the transmitting station and the receiving station prior to data transmission between the two stations, the antenna capability information element including information regarding the capabilities of the two stations.

33. The system according to item 32, wherein the wireless communication system is a wireless local area network (WLAN), the transmitting station is an access point, and the receiving station is a station in the WLAN.

34. The system according to item 32, wherein the wireless communication system is a wireless local area network (WLAN), the transmitting station is a station in the WLAN, and the receiving station is an access point.

35. The system according to item 32, wherein the wireless communication system is a wireless local area network (WLAN), the transmitting station is a station in the WLAN, and the receiving station is another station in the WLAN.

36. The system according to item 32, wherein said antenna capability information element includes an antenna technology field.

37. The system according to item 32, wherein said antenna capability information element further includes at least one field selected from the group consisting of a number of supported beams, an indicator of support of transmit antenna information after physical layer convergence protocol header, an indicator of diversity technique, an indicator of antenna measurement signaling support, and an indicator of multiple input support.

38. The system according to item 32, wherein each of said at least one fields is derived by the receiving station from said antenna technology field.

39. The system according to item 32, wherein said antenna capability information element is sent as part of a management frame.

40. The system according to item 32, wherein said antenna capability information element is sent as part of a control frame.

41. The system according to item 32, wherein said antenna capability information element is sent as part of a data frame.

42. The system according to item 32, wherein said antenna capability information element is exchanged between the transmitting station and the receiving station at any time after association between the transmitting station and the receiving station.

43. The system according to item 32, wherein said antenna capability information element is exchanged between the transmitting station and the receiving station at any time after a data transfer between the transmitting station and the receiving station.

44. A method for exchanging smart antenna capability information between a transmitting station and a receiving station in a wireless communication system, comprising the steps of:

sending antenna capability information from the transmitting station to the receiving station;
determining whether the receiving station can support the antenna capabilities of the transmitting station;
adjusting settings at the receiving station if the receiving station can support the antenna capabilities of the transmitting station; and
transmitting data from the transmitting station to the receiving station using the antenna capabilities if the receiving station can support the antenna capabilities of the transmitting station.

45. The method according to item 44, further comprising the step of replying to the transmitting station with an acknowledgement of the receiving station's antenna capabilities.

46. The method according to item 45, wherein the replying step is performed prior to the adjusting step.

47. The method according to item 45, wherein the replying step is performed after the adjusting step.

48. The method according to item 45, wherein the replying step includes notifying the transmitting station that the receiving station does not have the requested antenna capabilities.

49. The method according to item 48, wherein the transmitting step includes transmitting data from the transmitting station to the receiving station without using the antenna capabilities.

50. The method according to item 44, wherein the sending step includes sending the antenna capability information as part of a management frame.

51. The method according to item 44, wherein the adjusting step includes adjusting at least one setting selected from the group consisting of a number of antennas used, a diversity method, a smart antenna technology used, and additional antenna measurements.

52. A method for exchanging smart antenna capability information between a first station and a second station in a wireless communication system, comprising the steps of:

sending antenna capability information from the first station to the second station; and
sending antenna capability information from the second station to the first station.

53. The method according to item 52, further comprising the step of:

deciding locally, at the first station and at the second station, on the antenna capabilities to use for future transmission and reception between the first station and the second station.

54. The method according to item 53, wherein the deciding step is performed without any additional communication between the first station and the second station.

55. The method according to item 53, further comprising the step of:

comparing the antenna capabilities of the first station and the second station, wherein the deciding step includes using the antenna capabilities that are supported by both the first station and the second station.

56. The method according to item 53, further comprising the step of:

exchanging measurement information between the first station and the second station, the exchanging step being performed prior to the deciding step.

57. The method according to item 53, further comprising the step of:

negotiating antenna capability information between the first station and the second station, the negotiating step being performed prior to the deciding step.

58. A system for implementing smart antenna features in a wireless local area network, comprising:

an access point (AP), comprising:

a first antenna capability determining device;
a first antenna capability information device connected to said first antenna capability determining device, said first antenna capability determining device configured to determine the antenna capabilities of said AP by examining information stored in said first antenna capability information device;
a first transmitter/receiver connected to said first antenna capability determining device;
a first antenna connected to said transmitter/receiver; and
a beam switching device connected to said transmitter/receiver, said beam switching device configured to switch beams of said first antenna; and

a station, comprising:

a second antenna;
a second transmitter/receiver connected to said second antenna, said second transmitter/receiver configured to receive antenna capability information from said AP;
a second antenna capability determining device connected to said second transmitter/receiver;
a second antenna capability information device connected to said second antenna capability determining device, said second antenna capability determining device configured to compare the antenna capabilities of said AP received from said second transmitter/receiver with the antenna capabilities of said station retrieved from said second antenna capability information device; and
a station setting adjustment device connected to said second antenna capability determining device, said station setting adjustment device configured to adjust the settings of said station to utilize smart antenna capabilities.

59. The system according to item 58, wherein said first antenna capability determining device and said second antenna capability determining device are configured to negotiate a level of antenna capabilities that both said AP and said station can support.

**Claims**

1. A first 802.11 station (102; 110, 120) for exchanging antenna capability information in wireless communications, the first 802.11 station (102; 110, 120) comprising:

   a receiver configured to receive a probe request frame that contains an antenna capability information element (1710) that indicates a plurality of antenna capabilities of a second 802.11 station (110, 120; 102);
   a processor configured to determine whether the first 802.11 station (102; 110, 120) supports at least one of the indicated plurality of antenna capabilities; and
   a transmitter configured to transmit a probe response frame that contains a second antenna capability information element (1710) that indicates a plurality of antenna capabilities of the first 802.11 station (102; 110, 120).

2. The first station according to claim 1, wherein the first 802.11 station is a wireless local area network access point (110, 120).

3. The first station according to claim 1, wherein the first 802.11 station is a station (102) in a wireless local area network (100).

4. The first 802.11 station (102; 110, 120) according to claim 1, wherein the first or the second antenna capability information element (1710) includes an antenna technology field (1802).

5. The first 802.11 station (102; 110, 120) according to claim 1, wherein the first or the second antenna capability information element (1710) further includes at least one field selected from the group consisting of a number of supported beams (1804), an indicator of support of transmit antenna information after physical layer convergence protocol header (1806), an indicator of diversity technique (1808), an indicator of antenna measurement signaling support (1810), and an indicator of multiple input support (1812).

6. The first 802.11 station (102; 110, 120) according to claim 5, wherein each of the at least one fields is derived by the second 802.11 station (110, 120; 102) from the antenna technology field (1802).

7. The first 802.11 station (102; 110, 120) according to claim 1, wherein the probe response frame is transmitted at any time after association between the first 802.11 station (102; 110, 120) and the second 802.11 station (110, 120; 102).

8. The first 802.11 station (102; 110, 120) according to claim 1, wherein the association response frame is transmitted at any time after a data transfer between the first 802.11 station (102; 110, 120) and the second 802.11 station (110, 120; 102).

9. A method for exchanging antenna capability information at a first 802.11 station (102; 110, 120), the method comprising:

   receiving a probe request frame that contains an antenna capability information element (1710) that indicates a plurality of antenna capabilities of a second 802.11 station (110, 120; 102);
   determining whether the first 802.11 station (102; 110, 120) can support at least one of the indicated plurality of antenna capabilities of the second 802.11 station (110, 120; 102); and
   transmitting a probe response frame that contains a second antenna capability information element (1710) that indicates a plurality of antenna capabilities of the first 802.11 station (102; 110, 120).

10. The method according to claim 9, further comprising replying to the second 802.11 station (110, 120; 102) with an acknowledgement that indicates a plurality of antenna capabilities of the first 802.11 station (102; 110, 120).

11. The method according to claim 10, wherein the replying includes notifying the second 802.11 station (110, 120; 102) that the first 802.11 station (102; 110, 120) does not have the indicated antenna capabilities.

12. The method according to claim 9, wherein the transmitting includes receiving data from the second 802.11 station (110, 120; 102) without using the antenna capabilities.

13. The method according to claim 9, wherein the second antenna capability information element (1710) includes at least one field selected from the group consisting of a number of antennas used (1804), a diversity method (1808), a smart antenna technology used (1802), and an additional antenna measurement[[s]] (1810).

**Patentansprüche**

1. Erste 802.11-Station (102; 110, 120) zum Austausch von Antennenfähigkeitsinformationen in drahtlosen Kommunikationen, wobei die erste 802.11-Station (102; 110, 120) umfasst:

einen Empfänger, der zum Empfangen eines Sondierungsanfragerahmens (Probe Request Frame) konfiguriert ist, der ein Antennenfähigkeitsinformationselement (1710) enthält, das eine Vielzahl von Antennenfähigkeiten einer zweiten 802.11-Station (110, 120; 102) angibt;
einen Prozessor, der zum Ermitteln konfiguriert ist, ob die erste 802.11-Station (102; 110, 120) mindestens eine der angegebenen Vielzahl von Antennenfähigkeiten unterstützt; und
einen Sender, der zum Senden eines Sondierungsantwortrahmens (Probe Response Frame) konfiguriert ist, der ein zweites Antennenfähigkeitsinformationselement (1710) enthält, das eine Vielzahl von Antennenfähigkeiten der ersten 802.11-Station (102; 110, 120) angibt.

2. Erste Station nach Anspruch 1, wobei die erste 802.11-Station ein Zugriffspunkt auf ein drahtloses lokales Netzwerk (110, 120) ist.

3. Erste Station nach Anspruch 1, wobei die erste 802.11-Station eine Station (102) in einem drahtlosen lokalen Netzwerk (100) ist.

4. Erste 802.11-Station (102; 110, 120) nach Anspruch 1, wobei das erste oder das zweite Antennenfähigkeitsinformationselement (1710) ein Antennentechnologiefeld (1802) einschließt.

5. Erste 802.11-Station (102; 110, 120) nach Anspruch 1, wobei das erste oder das zweite Antennenfähigkeitsinformationselement (1710) ferner mindestens ein Feld ausgewählt aus der Gruppe bestehend aus einer Anzahl unterstützter Beams (1804), einer Angabe der Unterstützung von Sendeantenneninformationen nach dem physikalischem Schichtkonvergenzprotokollkopf (1806), einer Angabe der Diversitätstechnik (1808), einer Angabe der Unterstützung von Antennenmessungssignalisierung (1810) und einer Angabe der Unterstützung mehrerer Eingaben (1812) einschließt.

6. Erste 802.11-Station (102; 110, 120) nach Anspruch 5, wobei jedes des mindestens einen Feldes durch die zweite 802.11-Station (110, 120; 102) aus dem Antennentechnologiefeld (1802) abgeleitet wird.

7. Erste 802.11-Station (102; 110, 120) nach Anspruch 1, wobei der Probe Response Frame zu beliebiger Zeit nach der Zuordnung zwischen der ersten 802.11-Station (102; 110, 120) und der zweiten 802.11-Station (110, 120; 102) gesendet wird.

8. Erste 802.11-Station (102; 110, 120) nach Anspruch 1, wobei der Assoziationsantwortrahmen (Association Response Frame) zu beliebiger Zeit nach einer Datenübertragung zwischen der ersten 802.11-Station (102; 110, 120) und der zweiten 802.11-Station (110, 120; 102) gesendet wird.

9. Verfahren zum Austausch von Antennenfähigkeitsinformationen an einer ersten 802.11-Station (102; 110, 120), wobei das Verfahren umfasst:

Empfangen eines Probe Request Frames, der ein Antennenfähigkeitsinformationselement (1710) enthält, das eine Vielzahl von Antennenfähigkeiten einer zweiten 802.11-Station (110, 120; 102) angibt;
Ermitteln, ob die erste 802.11-Station (102; 110, 120) mindestens eine der angegebenen Vielzahl von Antennenfähigkeiten der zweiten 802.11-Station (110, 120; 102) unterstützen kann; und
Senden eines Probe Response Frames, der ein zweites Antennenfähigkeitsinformationselement (1710) enthält, das eine Vielzahl von Antennenfähigkeiten der ersten 802.11-Station (102, 110; 120) angibt.

**10.** Verfahren nach Anspruch 9, ferner umfassend Antworten an die zweite 802.11-Station (110, 120; 102) mit einer Bestätigung, die eine Vielzahl von Antennenfähigkeiten der ersten 802.11-Station (102; 110, 120) angibt.

**11.** Verfahren nach Anspruch 10, wobei das Antworten das Benachrichtigen der zweiten 802.11-Station (110, 120; 102) einschließt, dass die erste 802.11-Station (102; 110, 120) die angegebenen Antennenfähigkeiten nicht besitzt.

**12.** Verfahren nach Anspruch 9, wobei das Senden das Empfangen von Daten von der zweiten 802.11-Station (110, 120; 102) einschließt, ohne die Antennenfähigkeiten zu nutzen.

**13.** Verfahren nach Anspruch 9, wobei das zweite Antennenfähigkeitsinformationselement (1710) mindestens ein Feld ausgewählt aus der Gruppe bestehend aus einer Anzahl von verwendeten Antennen (1804), einem Diversitätsverfahren (1808), einer verwendeten intelligenten Antennentechnologie (1802) und einer zusätzlichen Antennenmessung/zusätzlichen Antennenmessungen (1810) einschließt.

## Revendications

**1.** Première station 802. 11 (102 ; 110, 120) pour échanger une information de capacité d'antenne dans des communications sans fil, la première station 802 : 11 (102 ; 110, 120) comprenant :

un récepteur configuré pour recevoir une trame de demande de sondage qui contient un élément d'information de capacité d'antenne (1710) qui indique une pluralité de capacités d'antennes d'une seconde station 802. 11 (110, 120 ; 102) ;
un processeur configuré pour déterminer si la première station 802. 11 (102 ; 110, 120) prend en charge au moins une de la pluralité indiquée de capacités d'antennes ; et
un émetteur configuré pour émettre une trame de réponse de sondage qui contient un second élément d'information de capacité d'antenne (1710) qui indique une pluralité de capacités d'antennes de la première station 802. 11 (102 ; 110, 120).

**2.** Première station selon la revendication 1, dans laquelle la première station 802. 11 est un point d'accès de réseau local sans fil (110, 120).

**3.** Première station selon la revendication 1, dans laquelle la première station 802. 11 est une station (102) dans un réseau local sans fil (100).

**4.** Première station 802. 11 (102 ; 110, 120) selon la revendication 1, dans laquelle le premier ou le second élément d'information de capacité d'antenne (1710) inclut un champ de technologie d'antenne (1802).

**5.** Première station 802.11 (102 ; 110, 120) selon la revendication 1, dans laquelle le premier ou le second élément d'information de capacité d'antenne (1710) inclut en outre au moins un champ sélectionné dans le groupe constitué d'un nombre de faisceaux pris en charge (1804), un indicateur de prise en charge d'information d'antenne émettrice après un en-tête de protocole de convergence de couche physique (1806), un indicateur de technique de diversité (1808), un indicateur de prise en charge de signalisation de mesure d'antenne (1810) et un indicateur de prise en charge d'entrées multiples (1812).

**6.** Première station 802. 11 (102 ; 110, 120) selon la revendication 5, dans laquelle chacun d'au moins un champ est déduit par la seconde station 802. 11 (110, 120 ; 102) du champ de technologie d'antenne (1802).

**7.** Première station 802. 11 (102 ; 110, 120) selon la revendication 1, dans laquelle la trame de réponse de sondage est transmise à n'importe quel moment après l'association entre la première station 802. 11 (102 ; 110, 120) et la seconde station 802:11 (110, 120 ; 102).

**8.** Première station 802. 11 (102 ; 110, 120) selon la revendication 1, dans laquelle la trame de réponse association est transmise à n'importe quel moment après un transfert de données entre la première station 802. 11 (102 ; 110, 120) et la seconde station 802:11 (110, 120 ; 102).

**9.** Procédé d'échange d'informations de capacité d'antenne au niveau d'une première station 802. 11 (102 ; 110, 120), le procédé comprenant le fait de :

recevoir une trame de demande de sondage qui contient un élément d'information de capacité d'antenne (1710) qui indique une pluralité de capacités d'antennes d'une seconde station 802. 11 (110, 120 ; 102) ;

déterminer si la première station 802. 11 (102 ; 110, 120) prend en charge au moins une de la pluralité indiquée de capacités d'antennes ; et

émettre une trame de réponse de sondage qui contient un second élément d'information de capacité d'antenne (1710) qui indique une pluralité de capacités d'antennes de la première station 802. 11 (102 ; 110, 120).

**10.** Procédé selon la revendication 9, comprenant en outre de répondre à la seconde station 802. 11 (110, 120 ; 102) avec un accusé de réception qui indique une pluralité de capacités d'antennes de la première station 802. 11 (102 ; 110, 120).

**11.** Procédé selon la revendication 10, dans lequel la réponse inclut de notifier à la seconde station du 802. 11 (110, 120 ; 102) que la première station 802. 11 (102 ; 110, 120) n'a pas les capacités d'antenne indiquées.

**12.** Procédé selon la revendication 9, dans lequel l'émission inclut de recevoir des données de la seconde station 802.11 (110, 120 ; 102) sans utiliser les capacités d'antennes.

**13.** Procédé selon la revendication 9, dans lequel le second élément d'information de capacité d'antenne (1710) inclut au moins un champ sélectionné dans le groupe composé d'un nombre d'antennes utilisées (1804), un procédé de diversité (1808), une technologie d'antenne intelligente utilisée (1802) et une mesure d'antenne additionnelle [[s]] (1810).

100

**FIG. 1**

706
SIFS< X<DIFS

AA PROBE REQUEST
700

1 | 2 | 3 | N

702 — DIFS

704
AA PROBE RESPONSE

**FIG. 7**

**FIG. 2**

200

| FRAME CONTROL | DURATION | DA | SA | BSSID | SEQUENCE CONTROL | TIME-STAMP FIELD | BEACON INFORMATION FIELD | CAPABILITY INFORMATION FIELD | SSID IE | SUPPORTED RATES IE | FH/DS PARAMETER SET IE | CF PARAMETER SET IE (OPTIONAL) | IBSS PARAMETER SET IE (OPTIONAL) | TIM IE (OPTIONAL) | TOTAL NUMBER OF BEAMS | CURRENT BEAM IDENTIFIER |
|---|---|---|---|---|---|---|---|---|---|---|---|---|---|---|---|---|
| 202 | 204 | 206 | 208 | 210 | 212 | 214 | 216 | 218 | 220 | 222 | 224 | 226 | 228 | 230 | 232 | 234 |

**FIG. 5**

500

| FRAME CONTROL | DURATION | DA | SA | BSSID | SEQUENCE CONTROL | SSID IE | SUPPORTED RATES IE | SCAN ALL BEAMS? |
|---|---|---|---|---|---|---|---|---|
| 502 | 504 | 506 | 508 | 510 | 512 | 514 | 516 | 518 |

**FIG. 6**

600

| FRAME CONTROL | DURATION | DA | SA | BSSID | SEQUENCE CONTROL | TIME-STAMP FIELD | BEACON INFORMATION FIELD | CAPABILITY INFORMATION FIELD | SSID IE | SUPPORTED RATES IE | FH/DS PARAMETER SET IE | CF PARAMETER SET IE (OPTIONAL) | IBSS PARAMETER SET IE (OPTIONAL) | TOTAL NUMBER OF BEAMS | CURRENT BEAM IDENTIFIER |
|---|---|---|---|---|---|---|---|---|---|---|---|---|---|---|---|
| 602 | 604 | 606 | 608 | 610 | 612 | 614 | 616 | 618 | 620 | 622 | 624 | 626 | 628 | 630 | 632 |

24

300

302 — DIFS

306 — SIFS< X<DIFS

|← —— AA BEACON INTERVAL —— →|

| 1 | 2 | 3 | N | | 1 | 2 | 3 | N |

304
AA BEACON FRAME

304
AA BEACON FRAME

**FIG. 3**

START

400

AP TRANSMITS AA BEACON
FRAME ON BEAM 1 OF N — 402

404

TRANSMIT ON
ALL BEAMS? — YES — END

406

NO

SWITCH TO NEXT BEAM
AND WAIT FOR INTERVAL — 408

TRANSMIT AA BEACON FRAME
ON CURRENT BEAM — 410

**FIG. 4**

FIG. 8

*FIG. 9*

| PLCP PREAMBLE | PLCP HEADER | BEAM INDICATOR | MAC FRAME |
|---|---|---|---|

1002 — 1004 — 1006 — 1008

1000

**FIG. 10**

| BEAM INDICATOR | AP ADDRESS | STA ADDRESS | AGE LIMIT |
|---|---|---|---|

1102 — 1104 — 1106 — 1108

1100

**FIG. 11**

| PLCP PREAMBLE | PLCP HEADER | BEAM INDICATOR | AP ADDRESS | STA ADDRESS | AGE LIMIT | MAC FRAME |
|---|---|---|---|---|---|---|

1202 — 1204 — 1206 — 1208 — 1210 — 1212 — 1214

1200

**FIG. 12a**

| PLCP PREAMBLE | PLCP HEADER | MAC FRAME | BEAM INDICATOR | AP ADDRESS | STA ADDRESS | AGE LIMIT |
|---|---|---|---|---|---|---|

1202 — 1204 — 1214 — 1206 — 1208 — 1210 — 1212

1220

**FIG. 12b**

| PLCP PREAMBLE | PLCP HEADER | BEAM INDICATOR INFORMATION FLAG | BEAM INDICATOR | AP ADDRESS | STA ADDRESS | AGE LIMIT | MAC FRAME |
|---|---|---|---|---|---|---|---|

1302 — 1304 — 1306 — 1308 — 1310 — 1312 — 1314 — 1316

1300

**FIG. 13a**

| PLCP PREAMBLE | PLCP HEADER | MAC FRAME | BEAM INDICATOR INFORMATION FLAG | BEAM INDICATOR | AP ADDRESS | STA ADDRESS | AGE LIMIT |
|---|---|---|---|---|---|---|---|

1302 — 1304 — 1316 — 1306 — 1308 — 1310 — 1312 — 1314

1320

**FIG. 13b**

**FIG. 14**

1400

START

1402 — AP SELECTS BEAM FOR STA

1404 — AP SENDS BEAM INDICATOR INFORMATION TO STA

1406 — AGE LIMIT OF BEAM INDICATOR INFORMATION REACHED ?

YES → STA SETS BEAM INDICATOR TO OMNI-DIRECTIONAL BEAM — 1420

STA SENDS PACKET ON OMNI-DIRECTIONAL BEAM — 1422

AP RECEIVES PACKET ON OMNI-DIRECTIONAL BEAM — 1424

NO

1408 — STA SETS BEAM INDICATOR TO SELECTED BEAM

1410 — STA SENDS PACKET ON SELECTED BEAM

1412 — AP BEGINS TO RECEIVE PACKET WITH BEAM INDICATOR ON OMNI-DIRECTIONAL BEAM

AP DECODES BEAM INDICATOR AND SWITCHES TO SELECTED BEAM TO RECEIVE REMAINDER OF PACKET — 1414

1416 — END

1502 — STA 1

1500 ——— AP (GAINS MEDIUM) —1510

1504 — STA 2

BEAM INDICATOR MESSAGE
(BEAM INDICATOR = $b_1$, AGE LIMIT = 5 s)

| SWITCH TO BEAM $b_1$ | —1512

1514 — ACKNOWLEDGMENT

1516 —

1518

| SWITCH TO BEAM $b_0$ | —1520

—1522

(GAINS MEDIUM)

—1526

STA 1 KNOWS THAT IT SHOULD
SET BEAM INDICATOR TO $b_1$ FOR
FUTURE TRANSMISSIONS TO AP,
UP TO 5 s FROM NOW

1524 — | SWITCH TO BEAM $b_2$ |

BEAM INDICATOR MESSAGE
(BEAM INDICATOR = $b_2$, AGE LIMIT = 5 s)

1530

1534 — (GAINS MEDIUM)

ACKNOWLEDGMENT

DATA (BEAM INDICATOR = $b_1$)

1532 — | SWITCH TO BEAM $b_0$ |

—1528

STA 2 KNOWS THAT IT SHOULD
SET BEAM INDICATOR TO $b_2$ FOR
FUTURE TRANSMISSIONS TO AP,
UP TO 5 s FROM NOW

1536 —

| SWITCH TO BEAM $b_1$ | —1538

DATA, REMAINDER OF PACKET

1540 — ACKNOWLEDGEMENT

1542 —

—1544

(GAINS MEDIUM)

| SWITCH TO BEAM $b_0$ |

DATA (BEAM INDICATOR = $b_2$)

—1546

—1548

1550 — | SWITCH TO BEAM $b_2$ |

DATA, REMAINDER OF PACKET

ACKNOWLEDGMENT

—1552

1556 — | SWITCH TO BEAM $b_0$ |

1554 —

**FIG. 15**

30

EP 2 106 037 B1

1600

| ESS | IBSS | CF POLLABLE | CF POLL REQUEST | PRIVACY | RESERVED |
|------|------|-------------|-----------------|---------|----------|
| 1602 | 1604 | 1606 | 1608 | 1610 | 1612 |

**FIG. 16**

PRIOR ART

1700

| | CAPABILITY INFORMATION FIELD | LISTEN INTERVAL FIELD | SSID IE | SUPPORTED RATES IE | ANTENNA CAPABILITY IE | |
|---|---|---|---|---|---|---|
| | 1702 | 1704 | 1706 | 1708 | 1710 | |

**FIG. 17**

1710

| ANTENNA TECHNOLOGY | NUMBER OF SUPPORTED BEAMS | SUPPORT OF TX ANTENNA INFO. AFTER PLCP HEADER | DIVERSITY TECHNIQUE | ANTENNA MEASUREMENT SIGNALING SUPPORT | MULTIPLE INPUT SUPPORT |
|---|---|---|---|---|---|
| 1802 | 1804 | 1806 | 1808 | 1810 | 1812 |

**FIG. 18**

**FIG. 19**

1900

START

1902 — TRANSMITTING STA SENDS ANTENNA CAPABILITY INFORMATION

1904 — RECEIVING STA RECEIVES ANTENNA CAPABILITY INFORMATION

1906 — DOES RECEIVING STA SUPPORT ANTENNA CAPABILITIES ?

1916 — RECEIVING STA NOTIFIES TRANSMITTING STA THAT IT DOES NOT HAVE THE REQUESTED ANTENNA CAPABILITIES

NO

YES

1908 — ADJUST SETTINGS AT RECEIVING STA TO HANDLE THE TRANSMITTING STA's ANTENNA CAPABILITIES

TRANSMITTING STA BEGINS TRANSMITTING WITHOUT ANTENNA CAPABILITIES

1918

1910 — SEND ACKNOWLEDGEMENT OF ANTENNA CAPABILITIES TO TRANSMITTING STA

1912 — TRANSMITTING STA BEGINS TRANSMITTING USING ANTENNA CAPABILITIES

1914 — END

32

2002 TRANSMITTING STA

RECEIVING 2004 STA

2010

SEND ANTENNA CAPABILITY INFORMATION →

2012

← SEND ANTENNA CAPABILITY INFORMATION

2014

2016 ← ANTENNA CAPABILITY NEGOTIATION → 2018
OR EXCHANGE MEASUREMENTS

| DECIDE LOCALLY WHICH ANTENNA FEATURES TO USE BASED ON ANTENNA CAPABILITIES SUPPORTED |
|---|

2000

| DECIDE LOCALLY WHICH ANTENNA FEATURES TO USE BASED ON ANTENNA CAPABILITIES SUPPORTED |
|---|

**FIG. 20**

BEAM SWITCHING DEVICE —2118

2102

2110

**FIG. 21**

2116

2100

| ANTENNA CAPABILITY DETERMINING DEVICE | — | TRANSMITTER/ RECEIVER |
|---|---|---|

2114

| ANTENNA CAPABILITY INFORMATION DEVICE |
|---|

2112

2104

2120 2122 2124 2128

| TRANSMITTER/ RECEIVER | ANTENNA CAPABILITY DETERMINING DEVICE | STA SETTING ADJUSTMENT DEVICE |
|---|---|---|

| ANTENNA CAPABILITY INFORMATION DEVICE |
|---|

2126

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1187506 A1

- US 2002193146 A1